# EUROPEAN PATENT APPLICATION

(11) **EP 4 241 563 A2**
(43) Date of publication of application: **13.09.2023**
(21) Application number: 23177922.4
(22) Date of filing: 30.05.2019
(51) Int. Cl.: A01N 43/653

(54) **STABILIZED FUNGICIDAL COMPOSITION COMPRISING CYCLODEXTRIN**

(30) Priority: 01.06.2018 US 201862679561 P
(62) Divisional of application: 19733241.4
(71) Applicant: Bayer CropScience LP, St. Louis, MO 63167 (US)
(72) Inventor: LE, Duy, Cary, NC 27518 (US); MATHEW, Philip, Morrisville, NC 27560 (US); WU, Tai-Teh, Chapel Hill, NC 27514 (US); ZHANG, Jian, Durham, NC 27713 (US); DAS, Anjan, Cary, NC 27519 (US)
(74) Representative: BIP Patents

(57) **Abstract**

The present invention provides a liquid formulation comprising a) a triazole an/or pyrazole fungicide; and b) at least one cyclodextrin compound. The present invention also provides a method for inhibiting degradation of a triazole fungicide in a liquid formulation, comprising (a) packaging the formulation in a suitable container; (b) reducing oxygen exposure of the triazole fungicide in the formulation as compared to oxygen exposure of the triazole fungicide when the formulation is in contact with air; and (c) closing or sealing the container.

## Description

### CROSS REFERENCE TO RELATED APPLICATIONS

This application claims priority to U.S. Provisional Patent Application No. 62/679,561, filed June 1, 2018. The contents of the aforementioned patent application is hereby incorporated by reference in its entirety.

### TECHNICAL FIELD

The invention relates to stabilized fungicide-containing liquid formulations, a process for their preparation, and a process for controlling phytopathogenic fungi and pests in crop protection.

### BACKGROUND

In the agricultural chemical industry, triazoles are an important class of fungicides. One such fungicidal triazole is 2-[2-(1-chlorocyclopropyl)-3-(2-chloro-phenyl)-2-hydroxy-propyl]-2,4-dihydro-3H-1,2,4-triazole-3-thione, also known as prothioconazole. Numerous prothioconazole-based products have been introduced by Bayer CropScience into the market since 2004 under brands such as PROCEED^{®}, PRALINE^{®}, INPUT^{®}, RAXIL^{®}, and PROSARO^{®}.

Unfortunately, prothioconazole is subject to chemical degradation, and aqueous dispersions of prothioconazole, in particular, microdispersions, may become chemically unstable, particularly when formulated at low, ready-to-use concentrations, significantly reducing their shelf life. Storage under certain conditions, such as with elevated temperatures, light irradiation, and contact with oxygen, can degrade prothioconazole to 2-(1-chlorocyclopropyl)-1-(2-chlorophenyl)-3-(1H-1,2,4-triazol-1-yl)propan-2-ol (also known as prothioconazole-desthio).

Losses to fifteen percent by weight of the active ingredient over time have been observed in low concentration formulations. In formulations of agricultural chemicals having one or more active ingredients (AI' s) that are present at a nominal declaration (label declaration) of greater than 1 percent by weight (1%) but less than 20 percent by weight (20%), current government regulations require that active ingredients be present in amounts that deviate no more than 5 percent by weight from the labeled concentration. If the nominal declaration is < 1%, the upper and lower certified limits (range) default to ± 10%; if the nominal declaration is >20% then the upper and lower certified limits (range) default to ±3%. It is important to minimize the amount of prothioconazole degradation to stay within these mandated limits.

There is a need to develop chemically stable aqueous dispersions of prothioconazole and processes for preparing them to help maintain the antifungal activity of these products. The chemically stable aqueous dispersions of prothioconazole and other triazole fungicides should be able to withstand severe storage conditions, including oxygen contact, high temperatures, and exposure to light, over long periods of time without significant amounts of degradation.

### SUMMARY

In certain embodiments, the present invention is directed to a liquid formulation comprising a) a triazole fungicide; and b) at least one cyclodextrin compound. The triazole fungicide may be selected from the group consisting of azaconazole, bitertanol, bromuconazole, cyproconazole, diclobutrazol, difenoconazole, diniconazole, diniconazole-M, epoxiconazole, etaconazole, fenbuconazole, fluquinconazole, flusilazole, flutriafol, furconazole, furconazole-cis, hexaconazole, imibenconazole, ipconazole, metconazole, myclobutanil, paclobutrazol, penconazole, propiconazole, prothioconazole, quinconazole, simeconazole, tebuconazole, tetraconazole, triadimefon, triadimenol, triticonazole, uniconazole, uniconazole-P, voriconazole, and 1-(4-chlorophenyl)-2-(1H-1,2,4-triazol-1-yl)cycloheptanol.

In other embodiments, the present invention is directed to a liquid formulation comprising a) a pyrazole-containing fungicide; and b) at least one cyclodextrin compound. The pyrazole fungicide may be selected from the group consisting of benzovindiflupyr, bixafen, fluindapyr, fluxapyroxad, furametpyr, isopyrazam, penflufen, penthiopyrad pydiflumetofen, pyrapropoyne, rabenzazole, and sedaxane.

In yet other embodiments the present invention is directed to a liquid formulation comprising a) a mixture of a triazole and a pyrazole fungicide and b) at least one cyclodextrin.

In certain aspects, the cyclodextrin compound is an α-cyclodextrin, a β-cyclodextrin, or a γ-cyclodextrin. In one aspect, the cyclodextrin compound is a β-cyclodextrin. The cyclodextrin compound may be a modified cyclodextrin having one or more substitutions on a hydroxyl group. In some embodiments, the substitution is selected from the group consisting of an alkyl group, a hydroxyalkyl group, an alkoxyalkyl group, a sulfoalkyl group, a sulfoalkly ether group, and a sugar group.

In other embodiments, the modified cyclodextrin is selected from the group consisting of a methyl cyclodextrin, a hydroxyethyl cyclodextrin, a 2-hydroxypropyl cyclodextrin, a glucosyl cyclodextrin, a sulfobutyl cyclodextrin, a sulfobutyl ether cyclodextrin, a glucosyl cyclodextrin, and a maltosyl cyclodextrin.

In certain embodiments, the cyclodextrin compound is selected from the group consisting of γ-cyclodextrin, α-cyclodextrin, β-cyclodextrin, glucosyl-α-cyclodextrin, maltosyl-α-cyclodextrin, glucosyl-β-cyclodextrin, maltosyl-β-cyclodextrin, 2-hydroxy-β-cyclodextrin, 2-hydroxypropyl-β-cyclodextrin (HPβCD), 2-hydroxypropyl-γ-cyclodextrin, hydroxyethyl-β-cyclodextrin, methyl-β-cyclodextrin, sulfobutylether-α-cyclodextrin, sulfobutylether-β-cyclodextrin, and sulfobutylether-γ-cyclodextrin, dimethyl-β-cyclodextrin (DMβCD), trimethyl-β-cyclodextrin (TMβCD), randomly methylated-β-cyclodextrin (RMβCD), hydroxyethyl-β-cyclodextrin (HEβCD), 3-hydroxypropyl-β-cyclodextrin (3HPβCD), 2,3-dihydroxypropyl-β-cyclodextrin (DHPβCD), 2-hydroxyisobutyl-β-cyclodextrin (HIBβCD), sulphobutylether-β-cyclodextrin (SBEβCD), glucosyl-β-cyclodextrin (G1βCD), maltosyl-β-cyclodextrin (G2βCD), sulfoethyl ether β-cyclodextrin, and sulfopropyl ether β-cyclodextrin.

In certain aspects, the liquid formulation further comprises one or more further agrochemical active substances. In other aspects, the liquid formulation also comprises at least one emulsifier.

The agrochemical active substances may be one or more insecticides, nematicides, fungicides, insect growth regulators, plant growth regulators, or plant growth enhancement agents.

In one embodiment, the agrochemical active substances are one or more fungicides.

In certain aspects, the one or more fungicides are inhibitors of the respiratory chain at Complex I or II selected from the group consisting of benzovindiflupyr, bixafen, boscalid, carboxin, fluopyram, flutolanil, fluxapyroxad, furametpyr, Isofetamid, isopyrazam (anti-epimeric enantiomer 1R,4S,9S), isopyrazam (anti-epimeric enantiomer 1S,4R,9R), isopyrazam (anti-epimeric racemate 1RS,4SR,9SR), isopyrazam (mixture of syn-epimeric racemate 1RS,4SR,9RS and anti-epimeric racemate 1RS,4SR,9SR), isopyrazam (syn-epimeric enantiomer 1R,4S,9R), isopyrazam (syn-epimeric enantiomer 1S,4R,9S), isopyrazam (syn-epimeric racemate 1RS,4SR,9RS), penflufen, penthiopyrad, pydiflumetofen, Pyraziflumid, sedaxane, 1,3-dimethyl-N-(1,1,3-trimethyl-2,3-dihydro-1H-inden-4-yl)-1H-pyrazole-4-carboxamide, 1,3-dimethyl-N-[(3R)-1,1,3-trimethyl-2,3-dihydro-1H-inden-4-yl]-1H-pyrazole-4-carboxamide, 1,3-dimethyl-N-[(3S)-1,1,3-trimethyl-2,3-dihydro-1H-inden-4-yl]-1H-pyrazole-4-carboxamide, 1-methyl-3-(trifluoromethyl)-N-[2'-(trifluoromethyl)biphenyl-2-yl]-1H-pyrazole-4-carboxamide, 2-fluoro-6-(trifluoromethyl)-N-(1,1,3-trimethyl-2,3-dihydro-1H-inden-4-yl)benzamide, 3-(difluoromethyl)-1-methyl-N-(1,1,3-trimethyl-2,3-dihydro-1H-inden-4-yl)-1H-pyrazole-4-carboxamide, 3-(difluoromethyl)-1-methyl-N-[(3R)-1,1,3-trimethyl-2,3-dihydro-1H-inden-4-yl]-1H-pyrazole-4-carboxamide, 3-(difluoromethyl)-1-methyl-N-[(3S)-1,1,3-trimethyl-2,3-dihydro-1H-inden-4-yl]-1H-pyrazole-4-carboxamide, Fluindapyr, 3-(difluoromethyl)-N-[(3R)-7-fluoro-1,1,3-trimethyl-2,3-dihydro-1H-inden-4-yl]-1-methyl-1H-pyrazole-4-carboxamide, 3-(difluoromethyl)-N-[(3S)-7-fluoro-1,1,3-trimethyl-2,3-dihydro-1H-inden-4-yl]-1-methyl-1H-pyrazole-4-carboxamide, 5,8-difluoro-N-[2-(2-fluoro-4-{[4-(trifluoromethyl)pyridin-2-yl] oxy }phenyl)ethyl] quinazolin-4-amine, N-(2-cyclopentyl-5-fluorobenzyl)-N-cyclopropyl-3-(difluoromethyl)-5-fluoro-1-methyl-1H-pyrazole-4-carboxamide, N-(2-tert-butyl-5-methylbenzyl)-N-cyclopropyl-3-(difluoromethyl)-5-fluoro-1-methyl-1H-pyrazole-4-carboxamide, N-(2-tert-butylbenzyl)-N-cyclopropyl-3-(difluoromethyl)-5-fluoro-1-methyl-1H-pyrazole-4-carboxamide,) N-(5-chloro-2-ethylbenzyl)-N-cyclopropyl-3-(difluoromethyl)-5-fluoro-1-methyl-1H-pyrazole-4-carboxamide, N-(5-chloro-2-isopropylbenzyl)-N-cyclopropyl-3-(difluoromethyl)-5-fluoro-1-methyl-1H-pyrazole-4-carboxamide, N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, N-[1-(2,4-dichlorophenyl)-1-methoxypropan-2-yl]-3-(difluoromethyl)-1-methyl-1H-pyrazole-4-carboxamide, N-[2-chloro-6-(trifluoromethyl)benzyl]-N-cyclopropyl-3-(difluoromethyl)-5-fluoro-1-methyl-1H-pyrazole-4-carboxamide, N-[3-chloro-2-fluoro-6-(trifluoromethyl)benzyl]-N-cyclopropyl-3-(difluoromethyl)-5-fluoro-1-methyl-1H-pyrazole-4-carboxamide, N-[5-chloro-2-(trifluoromethyl)benzyl]-N-cyclopropyl-3-(difluoromethyl)-5-fluoro-1-methyl-1H-pyrazole-4-carboxamide, N-cyclopropyl-3-(difluoromethyl)-5-fluoro-1-methyl-N-[5-methyl-2-(trifluoromethyl)benzyl]-1H-pyrazole-4-carboxamide, N-cyclopropyl-3-(difluoromethyl)-5-fluoro-N-(2-fluoro-6-isopropylbenzyl)-1-methyl-1H-pyrazole-4-carboxamide, N-cyclopropyl-3-(difluoromethyl)-5-fluoro-N-(2-isopropyl-5-methylbenzyl)-1-methyl-1H-pyrazole-4-carboxamide, N-cyclopropyl-3-(difluoromethyl)-5-fluoro-N-(2-isopropylbenzyl)-1-methyl-1H-pyrazole-4-carbothioamide, N-cyclopropyl-3-(difluoromethyl)-5-fluoro-N-(2-isopropylbenzyl)-1-methyl-1H-pyrazole-4-carboxamide, N-cyclopropyl-3-(difluoromethyl)-5-fluoro-N-(5-fluoro-2-isopropylbenzyl)-1-methyl-1H-pyrazole-4-carboxamide, N-cyclopropyl-3-(difluoromethyl)-N-(2-ethyl-4,5-dimethylbenzyl)-5-fluoro-1-methyl-1H-pyrazole-4-carboxamide, N-cyclopropyl-3-(difluoromethyl)-N-(2-ethyl-5-fluorobenzyl)-5-fluoro-1-methyl-1H-pyrazole-4-carboxamide, N-cyclopropyl-3-(difluoromethyl)-N-(2-ethyl-5-methylbenzyl)-5-fluoro-1-methyl-1H-pyrazole-4-carboxamide, N-cyclopropyl-N-(2-cyclopropyl-5-fluorobenzyl)-3-(difluoromethyl)-5-fluoro-1-methyl-1H-pyrazole-4-carboxamide, N-cyclopropyl-N-(2-cyclopropyl-5-methylbenzyl)-3-(difluoromethyl)-5-fluoro-1-methyl-1H-pyrazole-4-carboxamide, N-cyclopropyl-N-(2-cyclopropylbenzyl)-3-(difluoromethyl)-5-fluoro-1-methyl-1H-pyrazole-4-carboxamide, and pyrapropoyne. In one embodiment, the inhibitor of the respiratory chain at Complex I or II is penflufen.

In other embodiments, the cyclodextrin compound forms an inclusion complex with the triazole fungicide and/or one or more further agrochemical active substances. In some aspects, the inclusion complex is formed by dissolving the cyclodextrin compound with the triazole fungicide and/or one or more further agrochemical active substances in a solvent. In some embodiments, the solvent is then removed by evaporation. Solvents that may be used for this purpose include but are not limited to acetic acid, acetone, acetonitrile, benzene, 1-butanol, 2-butanol, 2-butanone, t-butyl alcohol, carbon tetrachloride, chlorobenzene, chloroform, cyclohexane, 1,2-dichloroethane, diethylene glycol, diethyl ether, diglyme (diethylene glycol dimethyl ether), 1,2-dimethoxy-ethane (glyme, DME), dimethyl-formamide (DMF), dimethyl sulfoxide (DMSO), 1,4-dioxane, ethanol, ethyl acetate, ethylene glycol, glycerin, heptane, Hexamethylphosphoramide (HMPA), Hexamethylphosphorous triamide (HMPT), hexane, methanol, methyl t-butyl, ether (MTBE), methylene chloride, N-methyl-2-pyrrolidinone (NMP), nitromethane, pentane, Petroleum ether (ligroine), 1-propanol, 2-propanol, pyridine, tetrahydrofuran (THF), toluene, triethyl amine, water, o-xylene, m-xylene, and p-xylene. In one embodiment, the solvent is ethanol.

In yet other embodiments, the liquid formulation comprises the triazole and/or pyrazole fungicide at a concentration of between about 0.1% and about 10% (w/w); and the at least one cyclodextrin compound at a concentration of between about 1% and about 50% (w/w).

In certain aspects, the triazole and/or pyrazole fungicide is at a concentration of between about 0.1% and about 10% (w/w), about 0.1% and about 7.5% (w/w), between about 0.1% and about 5% (w/w), or between about 0.1% and about 2.5% (w/w). In one aspect, the triazole or pyrazole fungicide is at a concentration of between about 0.1% and about 2.5% (w/w).

In other aspects, the at least one cyclodextrin compound is at a concentration of between about 1% and about 50% (w/w), between about 1% and about 40% (w/w), between about 1% and about 30% (w/w), between about 1% and about 40% (w/w), or between about 1% and about 20% (w/w). In one aspect, the at least one cyclodextrin compound is at a concentration of between about 1% and about 20% (w/w).

In yet other aspects, the molar ratio of the triazole and/or pyrazole fungicide to cyclodrextrin compound is between about 1:1 and about 1:25, between about 1:1 and about 1:20, between about 1:1 and about 1: 15, between about 1:1 and about 1: 10, or between about 1:1 and about 1:5. In one aspect, the molar ratio of the triazole fungicide to cyclodrextrin compound is between about 1:1 and about 1:15.

In certain aspects, the molar ratio of the triazole and/or pyrazole fungicide to cyclodrextrin compound is about 1:25, about 1:20, about 1:15, about 1:10, about 1:5, or about 1:1. In one aspect, the molar ratio of the triazole and/or pyrazole fungicide to cyclodrextrin compound is about 1:10.

In one aspect, the present invention is directed to a process for the preparation of the liquid formulation by mixing the triazole and/or pyrazole fungicide, the at least one cyclodextrin compound, the agrochemical active substances, and, optionally, further additives.

In certain aspects, the present invention is directed to a method for inhibiting degradation of a triazole and/or pyrazole fungicide in a liquid formulation, comprising (a) packaging the formulation in a suitable container; (b) reducing oxygen exposure of the triazole and/or pyrazole fungicide in the formulation as compared to oxygen exposure of the triazole and/or pyrazole fungicide when the formulation is in contact with air; and (c) closing or sealing the container.

In some embodiments, the container is with reduced or without headspace. In other embodiments, the container reduces or prevents diffusion of oxygen.

In some aspects, the oxygen exposure in step (b) is reduced by flushing the headspace and/or the formulation with a gas comprising less oxygen compared to air or with no oxygen. The gas may be hydrogen, nitrogen, helium, neon, argon, krypton, xenon, radon, carbon dioxide, nitrous oxide, hydrogen sulfide, a lower alkane, a halo alkane, an alkoxy alkane or a mixture thereof. In one aspect, the gas is nitrogen.

In other embodiments, the present invention is directed to a closed container comprising a liquid formulation comprising a triazole and/or pyrazole fungicide within the container, wherein the oxygen exposure of the triazole and/or pyrazole fungicide in the formulation is reduced compared to oxygen exposure of the triazole and/or pyrazole fungicide when the formulation is in contact with air by the disclosed methods.

In yet other embodiments, the present invention is directed to a method of combating plant pests or phytopathogenic fungi comprising providing the liquid formulation or the container comprising the liquid formulation as disclosed herein; preparing the formulation for agricultural use or for use as a biocide; and applying the prepared formulation to a plant or a locus in need thereof.

In one embodiment, the present invention relates to a liquid formulation comprising a triazole and/or pyrazole fungicide and a cyclodextrin compound as disclosed herein, wherein degradation of the triazole and/or pyrazole fungicide in the liquid formulation is inhibited according to the methods disclosed herein. With both the cyclodextrin compound in the liquid formulation and the reduction of oxygen exposure as described, the resulting combined effect on stabilization of the triazole and/or pyrazole fungicide may be synergistic.

### BRIEF DESCRIPTION OF THE DRAWINGS

**FIG. 1A** depicts the degradation of prothioconazole in an aqueous solution at a concentration of about 1% to about 1.5% (w/w) after storage for two weeks at 54°C, for eight weeks at 40°C, or for 52 weeks at 20°C. **FIG. 1B** depicts the degradation after storage for two weeks at 54°C of prothioconazole in an aqueous solution at a concentration of about 1% to about 1.5% (w/w) without any cyclodextrins ("Control PTZ") or mixed with 15% (w/w) 2-hydroxypropyl-β cyclodextrin ("PTZ + 15% HPCD") or with 15% (w/w) methyl-β cyclodextrin ("PTZ + 15% MeCD").
**FIG. 2** depicts differential scanning calorimetry (DSC) profiles of (1) prothioconazole; (2) HPCD; (3) a physical mixture of prothioconazole and HPCD; and (4) an inclusion complex of prothioconazole and HPCD.
**FIG.** 3 depicts stabilization of mixtures of prothioconazole with increasing amounts of cyclodextrin from 10 to 50 wt%.
**FIG. 4** depicts stabilization of mixtures of penflufen with increasing amounts of cyclodextrin from 10 to 50 wt%.

### DETAILED DESCRIPTION

As used herein, the verb "comprise" as is used in this description and in the claims and its conjugations are used in its non-limiting sense to mean that items following the word are included, but items not specifically mentioned are not excluded. In addition, reference to an element by the indefinite article "a" or "an" does not exclude the possibility that more than one of the elements are present, unless the context clearly requires that there is one and only one of the elements. The indefinite article "a" or "an" thus usually means "at least one".

It should be understood that any numerical range recited herein is intended to include all sub-ranges subsumed therein. For example, a range of 1 to 10 is intended to include all sub-ranges between and including the recited minimum value of 1 and the recited maximum value of 10, that is, having a minimum value equal to or greater than 1 and a maximum value of equal to or less than 10.

As used herein, the term "prothioconazole" refers to the chemical compound 2-[2-(1-chlorocyclopropyl)-3-(2-chloro-phenyl)-2-hydroxy-propyl]-2,4-dihydro-3H-1,2,4-triazole-3-thione with the following formula:

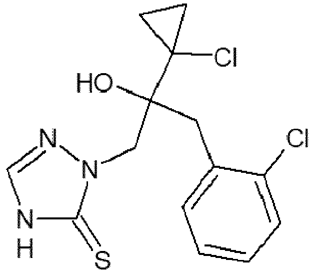

As used herein, the term "prothioconazole desthio" refers to the chemical compound 2-(1-chlorocyclopropyl)-1-(2-chlorophenyl)-3-(1H-1,2,4-triazol-1-yl)propan-2-ol (CAS number 178928-70-6) with the following formula: 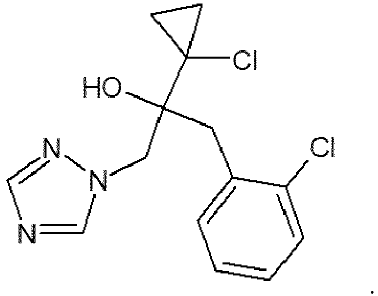 Prothioconazole is present as a racemate.

As used herein the term "penflufen" refers to a chemical compound N-[2-(1,3-dimethylbutyl)phenyl]-5-fluoro-1,3-dimethyl pyrazole-4-carboxamide with the following formula:

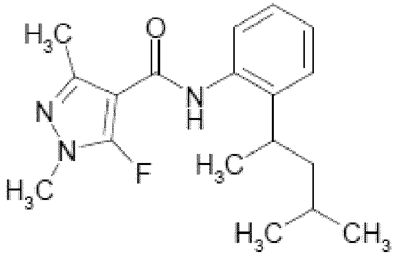

The formulations and methods disclosed herein provide a chemically stable and/or physically stable form of a triazole and/or pyrazole fungicide, and, particularly, of prothioconazole.

With respect to the present invention, the phrase "chemically stable" as used herein is intended to refer to a dispersion containing one or more active ingredients wherein the active ingredient does not chemically degrade or decompose to an unacceptable degree; e.g., the amount of active ingredient does not decrease by more than 10 percent by weight, preferably 5 percent by weight, compared to its original concentration, after storage of the dispersion at 54°C for four weeks.

With respect to the present invention, the phrase "physically stable" as used herein is intended to refer to a dispersion containing an active ingredient wherein the disperse phase does not settle, or is easily redispersible if some settling occurs, the two phases are more homogeneous throughout the dispersion, and/or the dispersion demonstrates less syneresis than in an unstable dispersion.

The preparation of a number of agricultural microbiocides such as prothioconazole, prepared from triazolyl derivatives, is disclosed in U.S. Patent No. 5,789,430.

In the context of the present invention the triazole fungicide may be selected from the group comprising azaconazole (3.1), bitertanol (3.2), bromuconazole (3.3), cyproconazole (3.4), diclobutrazol (3.5), difenoconazole (3.6), diniconazole (3.7), diniconazole-M (3.8), epoxiconazole (3.9), etaconazole (3.10), fenbuconazole (3.11), fluquinconazole (3.12), flusilazole (3.13), flutriafol (3.14), furconazole (3.15), furconazole-cis (3.16), hexaconazole (3.17), imibenconazole (3.18), ipconazole (3.19), metconazole (3.20), myclobutanil (3.21), paclobutrazol (3.22), penconazole (3.23), propiconazole (3.24), prothioconazole (3.25), quinconazole (3.26), simeconazole (3.27), tebuconazole (3.28), tetraconazole (3.29), triadimefon (3.30), triadimenol (3.31), triticonazole (3.32), uniconazole (3.33), uniconazole-P (3.34), voriconazole (3.35), and 1-(4-chlorophenyl)-2-(1H-1,2,4-triazol-1-yl)cycloheptanol (3.36).

Preferably, the triazole fungicide is selected from the group consisting of epoxiconazole (3.9), prothioconazole (3.25) and tebuconazole (3.28). More preferably, the triazole fungicide is selected from the group consisting of prothioconazole (3.25) and tebuconazole (3.28). The most preferred triazole fungicide is prothioconazole (3.25).

In the context of the present invention the pyrazole fungicide may be selected from the group consisting of benzovindiflupyr, bixafen, fluindapyr, fluxapyroxad, furametpyr, isopyrazam, penflufen, penthiopyrad pydiflumetofen, pyrapropoyne, rabenzazole, and sedaxane. Preferably, the pyrazole fungicide is penflufen.

In the context of the present invention, the cyclodextrin compound may be an α-cyclodextrin, a β-cyclodextrin, or a γ-cyclodextrin. The cyclodextrin compound may be modified for example, by haying one or more substitutions on a hydroxyl group, such as, a substitution on one or more of the 2-hydroxyl group, the 3-hydroxyl group, and the 6-hydroxyl group of any glucose monomer of the cyclodextrin. Suitable substitutions may include, but are not limited to alkyl group substitutions (e.g., methyl substitutions), a hydroxyalkyl group substitution, an alkoxyalkyl group substitution, a sulfoalkyl group substitution, a sulfoalkyl ether group substitution, an alkylammonium group substitution, a nitrile group substitution, a phosphine group substitution, and a sugar group substitution. Modified cyclodextrins may include, but are not limited to methyl cyclodextrins (e.g., methyl β-cyclodextrin), hydroxyethyl cylcodextrins e.g., hydroxyethyl β-cyclodextrin) 2-hydroxypropyl cyclodextrins (e.g., 2-hydroxypropyl β-cyclodextrin and 2-hydroxypropyl γ-cyclodextrin), sulfobutyl cyclodextrins, glucosyl cyclodextrins (e.g., glucosyl α-cyclodextrin and glucosyl β-cyclodextrin), maltosyl cyclodextrins (e.g., maltosyl α-cyclodextrin and maltosyl β-cyclodextrin), and sulfoalkly ether cyclodextrins (e.g., sulfoethyl ether β-cyclodextrin, sulfopropyl ether β-cyclodextrin, and sulfobutyl ether β-cyclodextrin).

U.S. Patent Nos. 5,134,127, and 5,376,645, each to Stella et al., disclose sulfoalkyl ether cyclodextrin derivatives and their use as solubilizing agents for water-insoluble active compounds. Stella et al. disclose an inclusion complex of the water-insoluble active compound and the sulfoalkyl ether cyclodextrin derivative, and compositions containing these inclusion complexes. Examples of sulfoalkyl ether cyclodextrin derivatives include mono-sulfobutyl ethers of β-cyclodextrin and monosulfopropyl ethers of β-cyclodextrin.

In certain aspects, the cyclodextrin compound may be selected from the group comprising γ-cyclodextrin (4.1), α-cyclodextrin (4.2), β-cyclodextrin (4.3), glucosyl-α-cyclodextrin (4.4), maltosyl-α-cyclodextrin (4.5), glucosyl-β-cyclodextrin (4.6), maltosyl-β-cyclodextrin (4.7), 2-hydroxy-β-cyclodextrin (4.8), 2-hydroxypropyl-β-cyclodextrin (HPβCD) (4.9), 2-hydroxypropyl-γ-cyclodextrin (4.10), hydroxyethyl-β-cyclodextrin (4.11), methyl-β-cyclodextrin (4.12), sulfobutylether-α-cyclodextrin (4.13), sulfobutylether-β-cyclodextrin (4.14), and sulfobutylether-γ-cyclodextrin (4.15), dimethyl-β-cyclodextrin (DMβCD) (4.16), trimethyl-β-cyclodextrin (TMβCD) (4.17), randomly methylated-β-cyclodextrin (RMβCD) (4.18), hydroxyethyl-β-cyclodextrin (HEβCD) (4.19), 3-hydroxypropyl-β-cyclodextrin (3HPβCD) (4.20), 2,3-dihydroxypropyl-β-cyclodextrin (DPHPβOP (4.21), 2-hydroxyisobutyl-β-cyclodextrin (HIBβCD) (4.22), sulphobutylether-β-cyclodextrin (SBEβCD) (4.23), glucosyl-β-cyclodextrin (G1βCD) (4.24), maltosyl-β-cyclodextrin (G2βCD) (4.25), sulfoethyl ether β-cyclodextrin (4.26), and sulfopropyl ether β-cyclodextrin (4.27).

Preferably, the cyclodextrin compound is selected from the group consisting of β-cyclodextrin (4.3), 2-hydroxypropyl-β-cyclodextrin (4.9), 2-hydroxypropyl-γ-cyclodextrin (4.10), methyl-β-cyclodextrin (4.12), sulfobutylether-α-cyclodextrin (4.13), sulfobutylether-β-cyclodextrin (4.14), and sulfobutylether-γ-cyclodextrin (4.15), dimethyl-β-cyclodextrin (DMβCD) (4.16), trimethyl-β-cyclodextrin (TMβCD) (4.17), randomly methylated-β-cyclodextrin (RMβCD) (4.18), 3-hydroxypropyl-β-cyclodextrin (3HPβCD) (4.20), 2,3-dihydroxypropyl-β-cyclodextrin (DHPβCD) (4.21), sulfoethyl ether β-cyclodextrin (4.26), and sulfopropyl ether β-cyclodextrin (4.27).

More preferably, the cyclodextrin compound is selected from the group consisting of β-cyclodextrin (4.3), 2-hydroxypropyl-β-cyclodextrin (4.9), methyl-β-cyclodextrin (4.12), and 3-hydroxypropyl-β-cyclodextrin (3HPβCD) (4.20). The most preferred cyclodextrin compounds are 2-hydroxypropyl-β-cyclodextrin (4.9) and methyl-β-cyclodextrin (4.12).

Preference is given to the following combinations: (3.9) + (4.1), (3.9) + (4.2), (3.9) + (4.3), (3.9) + (4.4), (3.9) + (4.5), (3.9) + (4.6), (3.9) + (4.7), (3.9) + (4.8), (3.9) + (4.9), (3.9) + (4.10), (3.9) + (4.11), (3.9) + (4.12), (3.9) + (4.13), (3.9) + (4.14), (3.9) + (4.15), (3.9) + (4.16), (3.9) + (4.17), (3.9) + (4.18), (3.9) + (4.19), (3.9) + (4.20), (3.9) + (4.21), (3.9) + (4.22), (3.9) + (4.23), (3.9) + (4.24), (3.9) + (4.25), (3.9) + (4.26), (3.9) + (4.27), (3.25) + (4.1), (3.25) + (4.2), (3.25) + (4.3), (3.25) + (4.4), (3.25) + (4.5), (3.25) + (4.6), (3.25) + (4.7), (3.25) + (4.8), (3.25) + (4.9), (3.25) + (4.10), (3.25) + (4.11), (3.25) + (4.12), (3.25) + (4.13), (3.25) + (4.14), (3.25) + (4.15), (3.25) + (4.16), (3.25) + (4.17), (3.25) + (4.18), (3.25) + (4.19), (3.25) + (4.20), (3.25) + (4.21), (3.25) + (4.22), (3.25) + (4.23), (3.25) + (4.24), (3.25) + (4.25), (3.25) + (4.26), (3.25) + (4.27), (3.28) + (4.1), (3.28) + (4.2), (3.28) + (4.3), (3.28) + (4.4), (3.28) + (4.5), (3.28) + (4.6), (3.28) + (4.7), (3.28) + (4.8), (3.28) + (4.9), (3.28) + (4.10), (3.28) + (4.11), (3.28) + (4.12), (3.28) + (4.13), (3.28) + (4.14), (3.28) + (4.15), (3.28) + (4.16), (3.28) + (4.17), (3.28) + (4.18), (3.28) + (4.19), (3.28) + (4.20), (3.28) + (4.21), (3.28) + (4.22), (3.28) + (4.23), (3.28) + (4.24), (3.28) + (4.25), (3.28) + (4.26), (3.28) + (4.27).

Out of these combinations the following are even further preferred: (3.9) + (4.3), (3.9) + (4.9), (3.9) + (4.10), (3.9) + (4.12), (3.9) + (4.13), (3.9) + (4.14), (3.9) + (4.15), (3.9) + (4.16), (3.9) + (4.17), (3.9) + (4.18), (3.9) + (4.20), (3.9) + (4.21), (3.9) + (4.26), (3.9) + (4.27), (3.25) + (4.3), (3.25) + (4.9), (3.25) + (4.10), (3.25) + (4.12), (3.25) + (4.13), (3.25) + (4.14), (3.25) + (4.15), (3.25) + (4.16), (3.25) + (4.17), (3.25) + (4.18), (3.25) + (4.20), (3.25) + (4.21), (3.25) + (4.26), (3.25) + (4.27), (3.28) + (4.3), (3.28) + (4.9), (3.28) + (4.10), (3.28) + (4.12), (3.28) + (4.13), (3.28) + (4.14), (3.28) + (4.15), (3.28) + (4.16), (3.28) + (4.17), (3.28) + (4.18), (3.28) + (4.20), (3.28) + (4.21), (3.28) + (4.26), (3.28) + (4.27).

Out of these combinations the following are even further preferred: (3.9) + (4.3), (3.9) + (4.9), (3.9) + (4.12), (3.9) + (4.20), (3.25) + (4.3), (3.25) + (4.9), (3.25) + (4.12), (3.25) + (4.20), (3.28) + (4.3), (3.28) + (4.9), (3.28) + (4.12), (3.28) + (4.20).

Preference is given to the following combinations: (3.25) + (4.1), (3.25) + (4.2), (3.25) + (4.3), (3.25) + (4.4), (3.25) + (4.5), (3.25) + (4.6), (3.25) + (4.7), (3.25) + (4.8), (3.25) + (4.9), (3.25) + (4.10), (3.25) + (4.11), (3.25) + (4.12), (3.25) + (4.13), (3.25) + (4.14), (3.25) + (4.15), (3.25) + (4.16), (3.25) + (4.17), (3.25) + (4.18), (3.25) + (4.19), (3.25) + (4.20), (3.25) + (4.21), (3.25) + (4.22), (3.25) + (4.23), (3.25) + (4.24), (3.25) + (4.25), (3.25) + (4.26), (3.25) + (4.27).

Out of these combinations, the following are even further preferred: (3.25) + (4.3), (3.25) + (4.9), (3.25) + (4.10), (3.25) + (4.12), (3.25) + (4.16), (3.25) + (4.17), (3.25) + (4.18), (3.25) + (4.20), (3.25) + (4.21).

Out of these combinations, the following are even further preferred: (3.25) + (4.3), (3.25) + (4.9), (3.25) + (4.12), (3.25) + (4.20).

In certain embodiments, the triazole fungicide is prothioconazole, and the cyclodextrin compound is 2-hydroxypropyl-β-cyclodextrin or methyl-β-cyclodextrin.

In other embodiments, the pyrazole fungicide is penflufen, and the cyclodextrin compound is 2-hydroxypropyl-β-cyclodextrin or methyl-β-cyclodextrin.

In yet other embodiments, the fungicide is a mixture of prothioconazole and penflufen and the cyclodextrin compound is 2-hydroxypropyl-β-cyclodextrin or methyl-β-cyclodextrin.

The formulation according to the invention is a liquid formulation. These include the formulation types DC (Dispersible Concentrate); EC (Emulsion Concentrate); EW (oil-in-water emulsion); ES (Emulsion Stain); FS (Multi-Phase Concentrate for Seed Treatment); EO (Water in Oil Emulsion); ME (Microemulsion); SE (Suspoemulsion); SL (Water Soluble Concentrate); CS (Capsule Suspension) and AL (Ready to Use Liquid Formulation, other liquids for undiluted use).

Optionally, the formulation of the invention may contain other additives, such as cationic emulsifiers, defoamers, thickeners, dispersants, stabilizers, adjuvants, preservatives, polymers, acids and bases, dyes, antifreeze, biocides, fillers and water. An adjuvant in this context is a component that enhances the biological effect of the formulation without the component itself having a biological effect.

The liquid formulation or aqueous dispersion of the present invention may optionally include auxiliary agents commonly used in agricultural treatment formulations and known to those skilled in the art. Examples include antioxidants such as ascorbic acid, penetrants, biocides, preservatives, deodorizers, fragrances, antifreezes and evaporation inhibitors such as glycerol and ethylene or propylene glycol, sorbitol, mineral oil, process oils, sodium lactate, fillers, carriers, colorants including pigments and/or dyes, pH modifiers (buffers, acids, and bases), salts such as calcium, magnesium, ammonium, potassium, sodium, and/or iron chlorides, fertilizers such as ammonium sulfate and ammonium nitrate, urea, and surfactants such as dispersing agents, emulsifiers, wetting agents, defoamers and suspension agents. The liquid formulation or aqueous dispersion may also contain other active ingredients such as additional fungicides, insecticides, pesticides, and/or fertilizers known in the art, provided they are compatible with prothioconazole.

Preferred additional insecticidal components are, for example, imidacloprid, nitenpyram, acetamiprid, thiacloprid, thiamethoxam, clothianidin, cyantraniliprole, chlorantraniliprole, flubendiamide, tetraniliprole, cyclaniliprole, spirodiclofen, spiromesifen, spirotetramat, abamectin, acrinathrin, chlorfenapyr, emamectin, ethiprole, fipronil, flonicamid, flupyradifurone , indoxacarb, metaflumizone, methoxyfenozide, milbemycin, pyridaben, pyridalyl, silafluofen, spinosad, sulfoxaflor, and triflumuron.

Preferred additional fungicidal components are, for example, bixafen, fenamidone, fenhexamide, fluopicolide, fluopyram, fluoxastrobin, iprovalicarb, isotianil, isopyrazam, pencycuron, penflufen, propineb, tebuconazole, trifloxystrobin, ametoctradin, amisulbrom, azoxystrobin, benthiavalicarbisopropyl, benzovindiflupyr, boscalid, carbendazim, chlorothanonil , cyazofamide, cyflufenamid, cymoxanil, cyproconazole, difenoconazole, ethaboxam, epoxiconazole, famoxadone, fluazinam, fluquinconazole, flusilazole, flutianil, fluxapyroxad, isopyrazam, kresoxim-methyl, mancozeb, mandipropamide, metconazole, pyriofenone, folpet, metaminostrobin, oxathiapiprolin, penthiopyrad, picoxystrobin, proquinazid, pydiflumetofen, pyraclostrobin, sedaxane, spiroxamine, tebufloquine, tetraconazole, valiphenalate, zoxamide, ziram, N-(5-chloro-2-isopropylbenzyl)-N-cyclopropyl-3-(difluoromethyl)-5-fluoro-1-methyl-1H-pyrazole-4-carboxamide, N-(5-chloro-2-isopropylbenzyl)-N-cyclopropyl-3-(difluoromethyl)-5-fluoro-1-methyl-1H-pyrazole-4-carboxamide, 2-{3-[2-(1-{[3,5-bis(difluoromethyl)-1H-pyrazol-1-yl]-acetyl}-piperidin-4-yl)1,3-thiazol-4-yl]-4,5-dihydro-1,2-oxazol-5-yl} phenyl methanesulfonate, 2-{3-[2-(1-{[3,5-bis(difluoromethyl)-1H-pyrazol-1-yl] acetyl }piperidin-4-yl)-1,3-thiazol-4-yl]-4,5-dihydro-1,2-oxazol-5-yl-3-chlorophenylmethane sulfonate, (3S, 6S, 7R, 8R)-8-benzyl-3-[({3-[(isobutyryloxy)methoxy]-4-methoxypyridin-2-yl}carbonyl)amino]-6-methyl-4,9-dioxo-1,5-dioxonan-7-yl 2-methylpropanoate (lyserphenylvalpyr).

Particularly preferred additional fungicidal components are, for example: tebuconazole, spiroxamine, bixafen, fluoxastrobin, trifloxystrobin, N-(5-chloro-2-isopropylbenzyl)-N-cyclopropyl-3-(difluoromethyl)-5-fluoro-1-methyl 1H-pyrazole-4-carboxamide, (3S, 6S, 7R, 8R)-8-benzyl-3-[({3-[(isobutyryloxy)methoxy]-4-methoxypyridin-2-yl}carbonyl)amino]-6-methyl-4,9-dioxo-1,5-dioxonan-7-yl-2-methylpropanoate (lyserphenylvalpyr) and fluopyram.

In some embodiments, the additional fungicidal component is an inhibitor of the respiratory chain at Complex I or II. Such inhibitors of the respiratory chain at Complex I or II include but are not limited to benzovindiflupyr, bixafen, boscalid, carboxin, fluopyram, flutolanil, fluxapyroxad, furametpyr, Isofetamid, isopyrazam (anti-epimeric enantiomer 1R,4S,9S), isopyrazam (anti-epimeric enantiomer 1S,4R,9R), isopyrazam (anti-epimeric racemate 1RS,4SR,9SR), isopyrazam (mixture of syn-epimeric racemate 1RS,4SR,9RS and anti-epimeric racemate 1RS,4SR,9SR), isopyrazam (syn-epimeric enantiomer 1R,4S,9R), isopyrazam (syn-epimeric enantiomer 1S,4R,9S), isopyrazam (syn-epimeric racemate 1RS,4SR,9RS), penflufen, penthiopyrad, pydiflumetofen, Pyraziflumid, sedaxane, 1,3-dimethyl-N-(1,1,3-trimethyl-2,3-dihydro-1H-inden-4-yl)-1H-pyrazole-4-carboxamide, 1,3-dimethyl-N-[(3R)-1,1,3-trimethyl-2,3-dihydro-1H-inden-4-yl]-1H-pyrazole-4-carboxamide, 1,3-dimethyl-N-[(3S)-1,1,3-trimethyl-2,3-dihydro-1H-inden-4-yl]-1H-pyrazole-4-carboxamide, 1-methyl-3-(trifluoromethyl)-N-[2'-(trifluoromethyl)biphenyl-2-yl]-1H-pyrazole-4-carboxamide, 2-fluoro-6-(trifluoromethyl)-N-(1,1,3-trimethyl-2,3-dihydro-1H-inden-4-yl)benzamide, 3-(difluoromethyl)-1-methyl-N-(1,1,3-trimethyl-2,3-dihydro-1H-inden-4-yl)-1H-pyrazole-4-carboxamide, 3-(difluoromethyl)-1-methyl-N-[(3R)-1,1,3-trimethyl-2,3-dihydro-1H-inden-4-yl]-1H-pyrazole-4-carboxamide, 3-(difluoromethyl)-1-methyl-N-[(3S)-1,1,3-trimethyl-2,3-dihydro-1H-inden-4-yl]-1H-pyrazole-4-carboxamide, Fluindapyr, 3-(difluoromethyl)-N-[(3R)-7-fluoro-1,1,3-trimethyl-2,3-dihydro-1H-inden-4-yl]-1-methyl-1H-pyrazole-4-carboxamide, 3-(difluoromethyl)-N-[(3S)-7-fluoro-1,1,3-trimethyl-2,3-dihydro-1H-inden-4-yl]-1-methyl-1H-pyrazole-4-carboxamide, 5,8-difluoro-N-[2-(2-fluoro-4-{ [4-(trifluoromethyl)pyridin-2-yl] oxy }phenyl)ethyl]quinazolin-4-amine, N-(2-cyclopentyl-5-fluorobenzyl)-N-cyclopropyl-3-(difluoromethyl)-5-fluoro-1-methyl-1H-pyrazole-4-carboxamide, N-(2-tert-butyl-5-methylbenzyl)-N-cyclopropyl-3-(difluoromethyl)-5-fluoro-1-methyl-1H-pyrazole-4-carboxamide, N-(2-tert-butylbenzyl)-N-cyclopropyl-3-(difluoromethyl)-5-fluoro-1-methyl-1H-pyrazole-4-carboxamide,) N-(5-chloro-2-ethylbenzyl)-N-cyclopropyl-3-(difluoromethyl)-5-fluoro-1-methyl-1H-pyrazole-4-carboxamide, N-(5-chloro-2-isopropylbenzyl)-N-cyclopropyl-3-(difluoromethyl)-5-fluoro-1-methyl-1H-pyrazole-4-carboxamide, N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, N-[1-(2,4-dichlorophenyl)-1-methoxypropan-2-yl]-3-(difluoromethyl)-1-methyl-1H-pyrazole-4-carboxamide, N-[2-chloro-6-(trifluoromethyl)benzyl]-N-cyclopropyl-3-(difluoromethyl)-5-fluoro-1-methyl-1H-pyrazole-4-carboxamide, N-[3-chloro-2-fluoro-6-(trifluoromethyl)benzyl]-N-cyclopropyl-3-(difluoromethyl)-5-fluoro-1-methyl-1H-pyrazole-4-carboxamide, N-[5-chloro-2-(trifluoromethyl)benzyl]-N-cyclopropyl-3-(difluoromethyl)-5-fluoro-1-methyl-1H-pyrazole-4-carboxamide, N-cyclopropyl-3-(difluoromethyl)-5-fluoro-1-methyl-N-[5-methyl-2-(trifluoromethyl)benzyl]-1H-pyrazole-4-carboxamide, N-cyclopropyl-3-(difluoromethyl)-5-fluoro-N-(2-fluoro-6-isopropylbenzyl)-1-methyl-1H-pyrazole-4-carboxamide, N-cyclopropyl-3-(difluoromethyl)-5-fluoro-N-(2-isopropyl-5-methylbenzyl)-1-methyl-1H-pyrazole-4-carboxamide, N-cyclopropyl-3-(difluoromethyl)-5-fluoro-N-(2-isopropylbenzyl)-1-methyl-1H-pyrazole-4-carbothioamide, N-cyclopropyl-3-(difluoromethyl)-5-fluoro-N-(2-isopropylbenzyl)-1-methyl-1H-pyrazole-4-carboxamide, N-cyclopropyl-3-(difluoromethyl)-5-fluoro-N-(5-fluoro-2-isopropylbenzyl)-1-methyl-1H-pyrazole-4-carboxamide, N-cyclopropyl-3-(difluoromethyl)-N-(2-ethyl-4,5-dimethylbenzyl)-5-fluoro-1-methyl-1H-pyrazole-4-carboxamide, N-cyclopropyl-3-(difluoromethyl)-N-(2-ethyl-5-fluorobenzyl)-5-fluoro-1-methyl-1H-pyrazole-4-carboxamide, N-cyclopropyl-3-(difluoromethyl)-N-(2-ethyl-5-methylbenzyl)-5-fluoro-1-methyl-1H-pyrazole-4-carboxamide, N-cyclopropyl-N-(2-cyclopropyl-5-fluorobenzyl)-3-(difluoromethyl)-5-fluoro-1-methyl-1H-pyrazole-4-carboxamide, N-cyclopropyl-N-(2-cyclopropyl-5-methylbenzyl)-3-(difluoromethyl)-5-fluoro-1-methyl-1H-pyrazole-4-carboxamide, N-cyclopropyl-N-(2-cyclopropylbenzyl)-3-(difluoromethyl)-5-fluoro-1-methyl-1H-pyrazole-4-carboxamide, and pyrapropoyne. In one embodiment, the inhibitor of the respiratory chain at Complex I or II is penflufen or fluopyram. In another embodiment, the inhibitor of the respiratory chain at Complex I or II is penflufen.

Further additives optionally contained in the formulations according to the invention are penetration promoters, wetting agents, spreading agents, defoamers, and/or retention aids.

Suitable defoamers include all customary defoamers including silicone-based and those based upon perfluoroalkyl phosphinic and phosphonic acids, in particular silicone-based defoamers, such as silicone oils, for example. In some embodiments, the defoamers are silicone oils, silicone oil preparations, magnesium stearate, phosphinic and/or phosphonic acids. Examples are SILCOLAPSE^{®} 482 from Bluestar Silicones, SILFOAM^{®} SC1132 from Wacker [dimethylsiloxanes and silicones, CAS No. 63148-62-9], SAG 1538 or SAG 1572 of Momentive [dimethylsiloxanes and silicones, CAS No. 63148-62-9] or FLUOWET^{®} PL 80.

Defoamers most commonly used are those from the group of linear polydimethylsiloxanes having an average dynamic viscosity, measured at 25°C, in the range from 1000 to 8000 mPas (mPas=millipascal-second), usually 1200 to 6000 mPas, and containing silica. Silica includes polysilicic acids, meta-silicic acid, ortho-silicic acid, silica gel, silicic acid gels, kieselguhr, precipitated SiO₂, and the like.

Defoamers from the group of linear polydimethylsiloxanes contain as their chemical backbone a compound of the formula HO-[Si(CH₃)₂-O-]ₙ-H, in which the end groups are modified, by etherification for example, or are attached to the groups -Si(CH₃)₃. Non-limiting examples of defoamers of this kind are RHODORSIL^{®} Antifoam 416 (Rhodia) and RHODORSIL^{®} Antifoam 481 (Rhodia). Other suitable defoamers are RHODORSIL^{®} 1824, ANTIMUSSOL 4459-2 (Clariant), Defoamer V 4459 (Clariant), SE Visk and AS EM SE 39 (Wacker). The silicone oils can also be used in the form of emulsions.

Additional suitable additives which may optionally be present in the formulations according to the invention include preservatives, antioxidants, dyes, and inert fillers.

Possible preservatives are all substances that can usually be used with agrochemicals for this purpose. Suitable preservatives are, for example, preparations with 5-chloro-2-methyl-4-isothiazolin-3-one [CIT; CAS-No. 26172-55-4], 2-methyl-4-isothiazolin-3-one [MIT, CAS-No. 2682-20-4] or 1,2-benzisothiazol-3(2H)-one [BIT, CAS-No. 2634-33-5]. Examples include PREVENTOL^{®} D7 (Lanxess), KATHON^{®} CG / ICP (Rohm & Haas), ACTICIDE^{®} SPX (Thor GmbH), and PROXEL^{®} GXL (Arch Chemicals).

As antioxidants, all substances are suitable which can usually be used with agrochemicals for this purpose. Preference is given to butylhydroxytoluene [3,5-di-tert-butyl-4-hydroxytoluene, CAS No. 128-37-0] and citric acid.

Possible dyes are all substances that can usually be used with agrochemicals for this purpose. Examples include titanium dioxide, carbon black, zinc oxide, blue pigments, red pigments and Permanent Red FGR.

Suitable inert fillers are all substances which can usually be used with agrochemicals for this purpose and which do not act as thickeners. Preference is given to inorganic particles, such as carbonates, silicates and oxides, and also organic substances, such as urea-formaldehyde condensates. Examples include kaolin, rutile, silica ("fumed silica"), silica gel and natural and synthetic silicates, also called talc.

A suitable container may be any container which is sealable or which at least can be closed, whereby sealable containers are preferred. Many kinds of material allow for the production of containers suitable in the present invention, e.g., glass, metal (such as aluminum and tin plate), plastic (such as thermoplasts like HDPE (high-density polyethylene), PA (polyamide), EVOH (ethylene-vinylalcolhol copolymer), PET (polyethylene terephthalate), PP (polypropylene), biopolymers, composite materials (such as cellulose materials like paper, cardboard, corrugated paper lined with barrier materials), barrier materials such as Coex (HDPE/PA, HDPE/EVOH) for hollow containers, and multilayer films and foil laminates (such as aluminum lined PE, PET, PA, EVOH, LDPE (low density polyethylene), PVC (polyvinyl chloride), EVA (ethylene-vinyl acetate) and OPP (oriented PP) or combinations of the above.

The container used in the present invention may be in various forms (such as bottle, bag (stand-up pouch, horizontal tubular bag), can and pot) and have various shapes with sealable and non-sealable closures. Closures can be of various kinds, such as breathable, preferably non-breathable and more preferably sealed. In some cases it may be preferable that the closure is hermetically sealed.

Breathable closings range from single layer polymers to multi-layered composites of papers, films, foils and coatings and include foams (such as PE) and membranes.

Non-breathable closings include induction seal liners. Induction sealing, otherwise known as cap sealing, is a non-contact heating process that accomplishes the hermetic sealing of a container with a closure that includes a heat-sealable foil laminate. The typical induction inner seal begins as a multi-laminate liner inside a closure. It consists of a layer of pulp board, a layer of wax, aluminum foil and a layer of polymer that is compatible with the bottle material and capable of heat sealing to the lip of the container. This sealing process takes place after the container has been filled and capped.

Reducing oxygen exposure refers to reducing the oxygen content of the atmosphere surrounding the liquid formulation. Such reduction may be effected by removing oxygen from the surrounding atmosphere in contact with the formulation. The oxygen content of the surrounding atmosphere is thereby reduced compared to the atmospheric oxygen content of ca. 21%, preferably by at least 30%, preferably at least 50%, more preferably at least 70%, 80%, 90% or even at least 95%. It is most preferred that the surrounding atmosphere in contact with the liquid formulation - if any - is essentially free of oxygen. In this regard, essentially free of oxygen relates to oxygen contents of less than 5%, preferably 2% or less, even more preferably 1% or less, such as 0.5% or even 0.2% 0.1% or 0%.

As shown in the examples, reducing oxygen exposure of a liquid formulation could markedly reduce the degradation of the active ingredient (e.g., triazole fungicide) during storage which results in an increased storage stability and a prolonged shelf life of the respective formulation.

In a preferred embodiment, the container is with reduced or without head space.

Head space is the space within a sealed container which is not filled with product, in particular, liquid formulation. A reduced head space refers to a volume of head space which is less than 30% of the volume of the liquid formulation, preferably less than 20%, more preferably less than 10% and even more preferably less than 5%.

In some cases, it may be possible to produce containers comprising the formulation which are essentially without head space, meaning a head space of less than 5%, preferably less than 2%, more preferably less than 1% of the volume of the liquid formulation comprised in a container.

A small or no head space is preferred in cases where re-suspension by shaking the liquid formulation is not necessary. On the other hand, a certain head space is needed for those cases where the active ingredient may sediment during storage and need to be re-suspended prior to use. In such cases, at least about 15% head space (of the total volume of the container) is generally needed for enabling for re-suspension of the active ingredient. In general, a suitable range of minimal head space lies between 15 and 18%, but may vary depending on the formulation.

In another preferred embodiment, the container is an airtight system, hermetically sealed with a container material impermeable to air. This can be combined with a reduced head space or no head space of the container.

In one preferred embodiment, said container reduces or prevents diffusion of oxygen.

In another preferred embodiment, reducing oxygen exposure in step (b) is effected by reducing oxygen in the head space of said container.

Reducing oxygen in the head space of a container may be effected in several ways. In one embodiment, reducing oxygen exposure in step (b) is effected by evacuating said container. Evacuating may take place before or after filling said container with the liquid formulation. Applicability of this technique depends on the shape and material of the container.

Vacuum packaging involves packaging the product in containers with low or no oxygen permeability and sealing it after evacuating the air. Using this technique oxygen levels may be reduced to less than 1%. The barrier properties of the container material restrict entry of oxygen from outside.

In another embodiment, reducing oxygen exposure in step (b) is effected by evacuating said container and subsequently refilling with a gas. Alternatively, reducing oxygen exposure in step (b) is effected by flushing or purging the container with a gas (i.e., the gas flush technique). Preferably, the gas is an inert gas (e.g., a noble gas), a non-reactive gase, or a mixtures of these gases. In one embodiment, the gas is an inert gas.

Gases suitable for use in the present invention are those which do not adversely influence the stability of the active ingredient (e.g., the triazole fungicide). Suitable gases include but are not limited to hydrogen, nitrogen, helium, neon, argon, krypton, xenon, radon, carbon dioxide, nitrous oxide, hydrogen sulfide, a lower alkane, a halo alkane, an alkoxy alkane or a mixture thereof. In one aspect, the gas is nitrogen, argon, carbon dioxide or a mixture thereof.

In certain aspects, the gas is a mixture of gases comprising between about 0.5%, about 10%, between about 0.5% and about 5%, or between about 0.5%, or about 2.5% of an inert gas (e.g., a noble gas) such as neon, argon, krypton, xenon, or radon. In one aspect, the gas is a mixture of gases comprising between about 0.5%, about 10%, between about 0.5% and about 5%, or between about 0.5%, or about 2.5% of argon.

In other aspects, the gas is a mixture of gases comprising about 0.5%, about 1%, about 2%, about 3%, about 4%, or about 5% of an inert gas (e.g., a noble gas) such as neon, argon, krypton, xenon, or radon. In one aspect, the gas is a mixture of gases comprising about 0.5%, about 1%, about 2%, about 3%, about 4%, or about 5% of argon.

In some embodiments, the present invention utilizes a technology referred to as a compensated vacuum. The compensated vacuum technique removes the air inside by pulling a vacuum on the atmosphere inside the package and then breaking the vacuum with the desired gas mixture. Since the replacement of the air is accomplished in a two-step process, the speed of operation is slower than the gas flush technique. However, since the air is removed by vacuum and not simply diluted, the efficiency of this process with respect to residual oxygen levels is better. The refilling is preferably done immediately after evacuating in order to avoid penetration of air into the evacuated container.

In a more preferred embodiment, evacuating said container and subsequent refilling with a gas, preferably an inert gas or mixtures of gases, preferably of inert gases is repeated at least twice. Depending on the success, i.e., the percentage of oxygen remaining in the container, this step may be repeated until the desired oxygen content is achieved.

In another preferred embodiment, oxygen exposure in step (b) is reduced by flushing said head space with a suitable, preferably an inert gas or a mixture of such gases comprising less oxygen compared to air or no oxygen. In this way, a modified atmosphere is created. Generally, said flushing may be effected prior to or after filling the container with the liquid formulation. However, it is preferred that the flushing step is done after filling of the container with the liquid formulation.

In a more preferred embodiment, said gas is nitrogen. Nitrogen flushing is a preservation method used to protect packaged foods and chemical plant protection agents. Nitrogen flushing and sealing machines are used to force the regular air out of the packaging and introduce nitrogen gas into the packaging.

In a preferred embodiment said container reduces or prevents diffusion of oxygen.

Reducing or preventing diffusion of oxygen can be influenced by one or more materials used in producing the container. Either the container consists of a material which prevents or reduces diffusion. Alternatively, the container may be covered, on the inside or the outside, with a film reducing or preventing diffusion of oxygen.

In another preferred embodiment, reducing oxygen exposure in step (b) is effected by (i) providing an oxygen-absorbing agent at the inside of the container, (ii) introducing an oxygen-absorbing agent into the container and subsequently sealing said container or (iii) including an oxygen-absorbing agent into the container material and/or the closing; and subsequently sealing said container after filling it with the formulation. Including an oxygen-absorbing material may be effected in the container wall and/or the closing such as a container cap.

It is preferred that oxygen exposure in step (b) is effected by (i) providing an oxygen-absorbing agent at the inside of the container, or (iii) including an oxygen-absorbing agent into the container material and/or the closing, most preferred exposure in step (b) is effected by (iii) including an oxygen-absorbing agent into the container material and/or the closing.

Providing an oxygen-absorbing agent at the inside of the container or incorporated into the container material and/or the closing can be effected using the so-called active-packaging technology which is normally used for foods or pharmaceuticals. One type of active packaging relates to using oxygen scavengers or oxygen absorbers in order to remove oxygen from inside a closed package. Exemplary systems are on cards or can be built into package films or molded structures such as the system disclosed in U.S. Patent No. 5,660,761, or the one known as SHELFPLUS^{®} O2 (Albis). Another suitable material is iron based, such as ATCO^{®} or AGELESS^{®} products packaged in bags. ATCO^{®} bags contain fine iron powder containing low amounts of sulfur. Yet another oxygen-absorbing material is RP-K consisting of unsaturated organic components, diatomaceous earth, polyethylene, Ca(OH)₂ and an absorbent graphite compound.

In another preferred embodiment, reducing oxygen exposure in step (b) is effected by (i) providing an oxygen-absorbing agent at the inside of the container, (ii) introducing an oxygen-absorbing agent into the container and subsequently sealing said container or (iii) including an oxygen-absorbing agent into the container material and/or the closing, and in addition to that by reducing oxygen in the container by other means such as by evacuating said container and subsequently refilling with a gas, preferably an inert gas, or mixtures of gases, preferably of inert gases, or by flushing said head space with a gas, preferably an inert gas, or a mixture of gases, preferably of inert gases, comprising less oxygen compared to air or no oxygen.

The oxygen-content of the container may be further reduced by degassing the liquid formulation or by flushing the liquid formulation with the inert gas, non-reactive gas, or mixture thereof.

The sealable container is formed of any material through which air cannot pass. Preferably, the container is formed of a plastic material with which an air-tight seal can be made using a standard heat-sealing process or using such other adhesive sealing process as is known to the art. The container may be transparent, translucent or opaque and may be formed of a single piece of material or more than one piece of material, wherein all edges of the container are sealed to prevent entry of outside air. In a preferred embodiment, the container is opaque so as to limit the exposure of the liquid formulation to light. In another embodiment, the container is wrapped in an opaque material (e.g., foil) to prevent light exposure to the liquid formulation.

The container can optionally include a one-way valve which permits gas to leave the interior of the container without permitting outside air to enter. The container may also include appropriate identifying indicia describing the contents and other useful data. The indicia may be provided directly on the container surface or on a label affixed thereto.

As application forms for the formulations described herein, all methods known to those skilled in the art may be used. For example: spraying, dipping, misting and a number of special methods for direct under- or above-ground treatment of whole plants or parts (seeds, root, stolons, stems, stem, leaf), such as stem injection in trees or stalk bandages in perennials, and a number of special indirect application methods.

In general, the application media known to those skilled in the art as customary for the respective field of application are used in the customary amounts for this purpose; for example, from several hundred liters of water per hectare in standard spraying over a few liters of oil per hectare in the "ultra low volume" aircraft application to a few milliliters of a physiological solutions in injection procedures. The concentrations of the crop protection agents according to the invention in the corresponding application media therefore vary within a wide range and are dependent on the respective field of use. In general, concentrations are used which are known to the person skilled in the art as customary for the respective field of use. Preference is given to concentrations of from 0.01% by weight to 99% by weight, particularly preferably from 0.1% by weight to 90% by weight.

The agrochemical formulations of the invention may, for example, be applied in the usual way for liquid preparations either as such or after prior dilution with water, i.e., as emulsions, suspensions or solutions. The application is carried out by conventional methods, e.g., by spraying, pouring or injecting.

The formulations according to the invention can be administered undiluted or diluted with water. In general, they are at least one part of water, preferably with 10 parts of water and more preferably with at least 100 parts of water, for example with 1 to 10,000, preferably 10 to 5,000 and most preferably with 50 to 24,000 parts of water with respect to the diluted formulation.

Likewise provided by the present invention is an emulsion obtainable by mixing water with the liquid formulation according to the invention. The mixing ratio of water to emulsion concentrate may be in the range of 1000 to 1 to 1 to 1, preferably 400 to 1 to 10 to 1.

The dilution is achieved by pouring the emulsion concentrates according to the invention into the water. For rapid mixing of the concentrate with water, agitation, such as stirring, is usually used. However, in some instances, agitation is not necessary. Dilutions are generally carried out at temperatures in the range of 0°C to 50°C, especially at 10°C to 30°C or at ambient temperature.

The water used for dilution is generally tap water. However, the water may already include water-soluble or finely-dispersed compounds used in crop protection, such as nutrients, fertilizers or pesticides.

Various types of oils, wetting agents, adjuvants, fertilizers or micronutrients as well as other pesticides (e.g., herbicides, insecticides, fungicides, growth regulators, safeners) may be added. These agents can be added to the formulations according to the invention in a weight ratio of 1:100 to 100:1, preferably 1:10 to 10:1.

In some aspects, the user applies the formulation according to the invention from a pre-metering device, a backpack syringe, a spray tank, a spray plane or an irrigation system. In certain aspects, the formulation according to the invention is diluted with water, buffer and/or other excipients to the desired application concentration, thereby obtaining the ready-to-use spray liquid or agrochemical composition of the invention. Usually 20 to 2000 liters, preferably 50 to 400 liters, of the ready-spray mixture are applied per hectare of agricultural land.

The required application rates of the pure active ingredients without formulation auxiliaries depend on the intensity of the pest infestation, on the development phase of the plants, on the environmental conditions of the place of use and the method of application. In general, the application rate is in the range from 0.001 to 3 kg, preferably from 0.005 to 2 kg, more preferably from 0.01 to 1 kg, and most preferably from 50 to 500 g of active ingredient per hectare, wherein the active substance is a triazole fungicide (e.g., prothioconazole) and/or a pyrazole fungicide (e.g., penflufen) plus other optional active ingredients.

In some embodiments, the diluted formulations of the invention are applied primarily by spraying, especially spraying the leaves. The application can be carried out by spraying techniques known to the person skilled in the art, for example, using water as a carrier and spray quantities of about 50 to 1000 liters per hectare, for example from 100 to 1000 liters per hectare.

The disclosed formulations containing a triazole fungicide (e.g., prothioconazole) have advantageous properties for the treatment of plants, in particular they are characterized by good application properties, high stability and high fungicidal activity.

Depending on the nature of the additional active ingredients present with the triazole active ingredient (e.g., prothioconazole), the formulations of the invention control a large number of pests and are useful for the treatment of crops, of inanimate matter, and/or in the home.

The formulations of the invention may be applied to any plants or plant parts.

As used herein "plants" mean all plants and plant populations, such as desired and undesired wild plants or crop plants (including naturally occurring crop plants). Crop plants may be plants which can be obtained by conventional breeding and optimization methods or by biotechnological and genetic engineering methods or combinations of these methods, including the genetically modified plants (GMO or transgenic plants) and the plant cultivars which are protectable and non-protectable by plant breeders' rights.

Genetically modified plants (GMO or transgenic plants) are plants in which a heterologous gene has been stably integrated into the genome. The expression "heterologous gene" essentially means a gene which is provided or assembled outside the plant and when introduced in the nuclear, chloroplastic or mitochondrial genome. This gene gives the transformed plant new or improved agronomic or other properties by expressing a protein or polypeptide of interest or by downregulating or silencing other gene(s) which are present in the plant (using for example, antisense technology, cosuppression technology, RNA interference - RNAi - technology or microRNA - miRNA - technology). A heterologous gene that is located in the genome is also called a transgene. A transgene that is defined by its particular location in the plant genome is called a transformation or transgenic event.

As used herein "plant cultivars" are understood to mean plants which have new properties ("traits") and have been obtained by conventional breeding, by mutagenesis or by recombinant DNA techniques. They can be cultivars, varieties, bio- or genotypes.

"Plant parts" are understood to mean all parts and organs of plants above and below the ground, such as shoots, leaves, needles, stalks, stems, flowers, fruit bodies, fruits, seeds, roots, tubers and rhizomes. The plant parts also include harvested material and vegetative and generative propagation material, for example cuttings, tubers, rhizomes, slips and seeds.

Plants which may be treated in accordance with the methods of the invention include the following: cotton, flax, grapevine, fruit, vegetables, such as *Rosaceae* sp. (for example pome fruits such as apples and pears, but also stone fruits such as apricots, cherries, almonds and peaches, and soft fruits such as strawberries), *Ribesioidae* sp., *Juglandaceae* sp., *Betulaceae* sp., *Anacardiaceae* sp., *Fagaceae* sp., *Moraceae* sp., *Oleaceae* sp., *Actinidaceae* sp., *Lauraceae* sp., *Musaceae* sp. (for example banana trees and plantations), *Rubiaceae* sp. (for example coffee), *Theaceae* sp., *Sterculiceae* sp., *Rutaceae* sp. (for example lemons, oranges and grapefruit); *Solanaceae* sp. (for example tomatoes), *Liliaceae* sp., *Asteraceae* sp. (for example lettuce), *Umbelliferae* sp., *Cruciferae* sp., *Chenopodiaceae* sp., *Cucurbitaceae* sp. (for example cucumber), *Alliaceae* sp. (for example leek, onion), *Papilionaceae* sp. (for example peas); major crop plants, such as *Gramineae* sp. (for example maize, turf, cereals such as wheat, rye, rice, barley, oats, millet and triticale), *Asteraceae* sp. (for example sunflower), *Brassicaceae* sp. (for example white cabbage, red cabbage, broccoli, cauliflower, Brussels sprouts, pak choi, kohlrabi, radishes, and oilseed rape, mustard, horseradish and cress), *Fabacae* sp. (for example bean, peanuts), *Papilionaceae* sp. (for example soya bean), *Solanaceae* sp. (for example potatoes), *Chenopodiaceae* sp. (for example sugar beet, fodder beet, swiss chard, beetroot); useful plants and ornamental plants for gardens and wooded areas; and genetically modified varieties of each of these plants.

Plants and plant cultivars which may be treated by the above disclosed methods include plants and plant cultivars which are resistant against one or more biotic stresses, i.e., said plants show a better defense against animal and microbial pests, such as against nematodes, insects, mites, phytopathogenic fungi, bacteria, viruses and/or viroids.

Plants and plant cultivars which may be treated by the above disclosed methods include those plants which are resistant to one or more abiotic stresses. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients, shade avoidance.

Plants and plant cultivars which may be treated by the above disclosed methods include those plants characterized by enhanced yield characteristics. Increased yield in said plants may be the result of, for example, improved plant physiology, growth and development, such as water use efficiency, water retention efficiency, improved nitrogen use, enhanced carbon assimilation, improved photosynthesis, increased germination efficiency and accelerated maturation. Yield may furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content and composition for example cotton or starch, protein content, oil content and composition, nutritional value, reduction in anti-nutritional compounds, improved processability and better storage stability.

Plants and plant cultivars which may be treated by the above disclosed methods include plants and plant cultivars which are hybrid plants that already express the characteristic of heterosis or hybrid vigor which results in generally higher yield, vigor, health and resistance towards biotic and abiotic stresses.

Plants and plant cultivars (obtained by plant biotechnology methods such as genetic engineering) which may be treated by the above disclosed methods include plants and plant cultivars which are herbicide-tolerant plants, i.e., plants made tolerant to one or more given herbicides. Such plants can be obtained either by genetic transformation, or by selection of plants containing a mutation imparting such herbicide tolerance.

Plants and plant cultivars (obtained by plant biotechnology methods such as genetic engineering) which may be treated by the above disclosed methods include plants and plant cultivars which are insect-resistant transgenic plants, i.e., plants made resistant to attack by certain target insects. Such plants can be obtained by genetic transformation, or by selection of plants containing a mutation imparting such insect resistance.

Plants and plant cultivars (obtained by plant biotechnology methods such as genetic engineering) which may be treated by the above disclosed methods include plants and plant cultivars which are disease-resistant transgenic plants, i.e., plants made resistant to attack by certain target insects. Such plants can be obtained by genetic transformation, or by selection of plants containing a mutation imparting such insect resistance.

Plants and plant cultivars (obtained by plant biotechnology methods such as genetic engineering) which may be treated by the above disclosed methods include plants and plant cultivars which are tolerant to abiotic stresses. Such plants can be obtained by genetic transformation, or by selection of plants containing a mutation imparting such stress resistance.

Plants and plant cultivars (obtained by plant biotechnology methods such as genetic engineering) which may be treated by the above disclosed methods include plants and plant cultivars which show altered quantity, quality and/or storage-stability of the harvested product and/or altered properties of specific ingredients of the harvested product.

Plants and plant cultivars (obtained by plant biotechnology methods such as genetic engineering) which may be treated by the above disclosed methods include plants and plant cultivars, such as cotton plants, with altered fiber characteristics. Such plants can be obtained by genetic transformation, or by selection of plants contain a mutation imparting such altered fiber characteristics.

Plants and plant cultivars (obtained by plant biotechnology methods such as genetic engineering) which may be treated by the above disclosed methods include plants and plant cultivars, such as oilseed rape or related *Brassica* plants, with altered oil profile characteristics. Such plants can be obtained by genetic transformation, or by selection of plants contain a mutation imparting such altered oil profile characteristics.

Plants and plant cultivars (obtained by plant biotechnology methods such as genetic engineering) which may be treated by the above disclosed methods include plants and plant cultivars, such as oilseed rape or related *Brassica* plants, with altered seed shattering characteristics. Such plants can be obtained by genetic transformation, or by selection of plants contain a mutation imparting such altered seed shattering characteristics and include plants such as oilseed rape plants with delayed or reduced seed shattering.

Plants and plant cultivars (obtained by plant biotechnology methods such as genetic engineering) which may be treated by the above disclosed methods include plants and plant cultivars, such as tobacco plants, with altered post-translational protein modification patterns.

Non-limiting examples of pathogens of fungal diseases which may be treated in accordance with the invention include:
diseases caused by powdery mildew pathogens, for example *Blumeria* species, for example *Blumeria graminis; Podosphaera* species, for example *Podosphaera leucotricha*; *Sphaerotheca* species, for example *Sphaerotheca fuliginea*; *Uncinula* species, for example *Uncinula necator;*
diseases caused by rust disease pathogens, for example *Gymnosporangium* species, for example *Gymnosporangium sabinae; Hemileia* species, for example *Hemileia vastatrix*; *Phakopsora* species, for example *Phakopsora pachyrhizi* or *Phakopsora meibomiae; Puccinia* species, for example *Puccinia recondita, Puccinia graminis* oder *Puccinia striiformis*; *Uromyces* species, for example *Uromyces appendiculatus*;
diseases caused by pathogens from the group of the Oomycetes, for example *Albugo* species, for example *Albugo candida; Bremia* species, for example *Bremia lactucae*; *Peronospora* species, for example *Peronospora pisi* or *P. brassicae; Phytophthora* species, for example *Phytophthora infestans; Plasmopara* species, for example *Plasmopara viticola*; *Pseudoperonospora* species, for example *Pseudoperonospora humuli* or *Pseudoperonospora cubensis; Pythium* species, for example *Pythium ultimum*;
leaf blotch diseases and leaf wilt diseases caused, for example, by *Alternaria* species, for example *Alternaria solani; Cercospora* species, for example *Cercospora beticola*; *Cladiosporium* species, for example *Cladiosporium cucumerinum; Cochliobolus* species, for example Cochliobolus sativus (conidial form: *Drechslera*, syn: *Helminthosporium)* or *Cochliobolus miyabeanus; Colletotrichum* species, for example *Colletotrichum lindemuthanium; Corynespora* species, for example *Corynespora cassiicola*; *Cycloconium* species, for example *Cycloconium oleaginum; Diaporthe* species, for example *Diaporthe citri; Elsinoe* species, for example *Elsinoe fawcettii; Gloeosporium* species, for example *Gloeosporium laeticolor*; *Glomerella* species, for example *Glomerella cingulata*; *Guignardia* species, for example *Guignardia bidwelli; Leptosphaeria* species, for example *Leptosphaeria maculans*; *Magnaporthe* species, for example *Magnaporthe grisea; Microdochium* species, for example *Microdochium nivale; Mycosphaerella* species, for example *Mycosphaerella graminicola, Mycosphaerella arachidicola* or *Mycosphaerella fijiensis; Phaeosphaeria* species, for example *Phaeosphaeria nodorum; Pyrenophora* species, for example *Pyrenophora teres* or *Pyrenophora tritici repentis; Ramularia* species, for example *Ramularia collo-cygni* or *Ramularia areola; Rhynchosporium* species, for example *Rhynchosporium secalis; Septoria* species, for example *Septoria apii* or *Septoria lycopersici; Stagonospora* species, for example *Stagonospora nodorum*; *Typhula* species, for example *Typhula incarnata*; *Venturia* species, for example *Venturia inaequalis;*
root and stem diseases caused, for example, by *Corticium* species, for example *Corticium graminearum; Fusarium* species, for example *Fusarium oxysporum; Gaeumannomyces* species, for example *Gaeumannomyces graminis; Plasmodiophora* species, for example *Plasmodiophora brassicae; Rhizoctonia* species, for example *Rhizoctonia solani; Sarocladium* species, for example *Sarocladium oryzae; Sclerotium* species, for example *Sclerotium oryzae; Tapesia* species, for example *Tapesia acuformis*; *Thielaviopsis* species, for example *Thielaviopsis basicola*;
ear and panicle diseases (including corn cobs) caused, for example, by *Alternaria* species, for example *Alternaria* spp.; *Aspergillus* species, for example *Aspergillus flavus; Cladosporium* species, for example *Cladosporium cladosporioides*; *Claviceps* species, for example *Claviceps purpurea; Fusarium* species, for example *Fusarium culmorum; Gibberella* species, for example *Gibberella zeae; Monographella* species, for example *Monographella nivalis; Stagnospora* species, for example *Stagnospora nodorum;*
diseases caused by smut fungi, for example *Sphacelotheca* species, for example *Sphacelotheca reiliana*; *Tilletia* species, for example *Tilletia caries* or *Tilletia controversa; Urocystis* species, for example *Urocystis occulta*; *Ustilago* species, for example *Ustilago nuda*;
fruit rot caused, for example, by *Aspergillus* species, for example *Aspergillus flavus; Botrytis* species, for example *Botrytis cinerea; Monilinia* species, for example *Monilinia laxa*; *Penicillium* species, for example *Penicillium expansum* or *Penicillium purpurogenum; Rhizopus* species, for example *Rhizopus stolonifer; Sclerotinia* species, for example *Sclerotinia sclerotiorum; Verticilium* species, for example *Verticilium alboatrum*;
seed- and soil-borne rot and wilt diseases, and also diseases of seedlings, caused, for example, by *Alternaria* species, for example *Alternaria brassicicola*; *Aphanomyces* species, for example *Aphanomyces euteiches; Ascochyta* species, for example *Ascochyta lentis*; *Aspergillus* species, for example *Aspergillus flavus; Cladosporium* species, for example *Cladosporium herbarum; Cochliobolus* species, for example *Cochliobolus sativus* (conidial form: *Drechslera*, Bipolaris Syn: *Helminthosporium); Colletotrichum* species, for example *Colletotrichum coccodes; Fusarium* species, for example *Fusarium culmorum; Gibberella* species, for example *Gibberella zeae; Macrophomina* species, for example *Macrophomina phaseolina*; *Microdochium* species, for example *Microdochium nivale; Monographella* species, for example *Monographella nivalis; Penicillium* species, for example *Penicillium expansum; Phoma* species, for example *Phoma lingam*; *Phomopsis* species, for example *Phomopsis sojae; Phytophthora* species, for example *Phytophthora cactorum; Pyrenophora* species, for example *Pyrenophora graminea*; *Pyricularia* species, for example *Pyricularia oryzae; Pythium* species, for example *Pythium ultimum; Rhizoctonia* species, for example *Rhizoctonia solani; Rhizopus* species, for example *Rhizopus oryzae; Sclerotium* species, for example *Sclerotium rolfsii; Septoria* species, for example *Septoria nodorum; Typhula* species, for example *Typhula incarnata*; *Verticillium* species, for example *Verticillium dahliae;*
cancers, galls and witches' broom caused, for example, by *Nectria* species, for example *Nectria galligena*;
wilt diseases caused, for example, by *Verticillium* species, for example *Verticillium longisporum*; *Fusarium* species, for example *Fusarium oxysporum;*
deformations of leaves, flowers and fruits caused, for example, by *Exobasidium* species, for example *Exobasidium vexans; Taphrina* species, for example *Taphrina deformans*;
degenerative diseases in woody plants, caused, for example, by *Esca* species, for example *Phaeomoniella chlamydospora*, *Phaeoacremonium aleophilum* or *Fomitiporia mediterranean Ganoderma* species, for example *Ganoderma boninense;*
diseases of plant tubers caused, for example, by *Rhizoctonia* species, for example *Rhizoctonia solani; Helminthosporium* species, for example *Helminthosporium solani;*
diseases caused by bacterial pathogens, for example *Xanthomonas* species, for example *Xanthomonas campestris pv. oryzae; Pseudomonas* species, for example *Pseudomonas syringae pv. lachrymans*; *Erwinia* species, for example *Erwinia amylovora; Liberibacter* species, for example *Liberibacter asiaticus*; *Xyella* species, for example *Xylella fastidiosa*; *Ralstonia* species, for example *Ralstonia solanacearum; Dickeya* species, for example *Dickeya solani; Clavibacter* species, for example *Clavibacter michiganensis; Streptomyces* species, for example *Streptomyces scabies.*
diseases of soya beans:

Fungal diseases on leaves, stems, pods and seeds caused, for example, by *Alternaria* leaf spot (*Alternaria* spec. *atrans tenuissima*), *Anthracnose (Colletotrichum gloeosporoides dematium var. truncatum),* brown spot *(Septoria glycines), cercospora* leaf spot and blight *(Cercospora kikuchii), choanephora* leaf blight (*Choanephora infundibulifera trispora (Syn.)), dactuliophora* leaf spot (*Dactuliophora glycines),* downy mildew (*Peronospora manshurica*), *drechslera* blight (*Drechslera glycini),* frogeye leaf spot *(Cercospora sojina*), *leptosphaerulina* leaf spot (*Leptosphaerulina trifolii), phyllostica* leaf spot (*Phyllosticta sojaecola*), pod and stem blight *(Phomopsis sojae),* powdery mildew (*Microsphaera diffusa*), *pyrenochaeta* leaf spot (*Pyrenochaeta glycines),* rhizoctonia aerial, foliage, and web blight *(Rhizoctonia solani),* rust (*Phakopsora pachyrhizi*, *Phakopsora meibomiae),* scab *(Sphaceloma glycines), stemphylium* leaf blight (*Stemphylium botryosum),* sudden death syndrome *(Fusarium virguliforme*), target spot (*Corynespora cassiicola*).

Fungal diseases on roots and the stem base caused, for example, by black root rot (*Calonectria crotalariae*), charcoal rot (*Macrophomina phaseolina*), fusarium blight or wilt, root rot, and pod and collar rot *(Fusarium oxysporum*, *Fusarium orthoceras, Fusarium semitectum, Fusarium equiseti),* mycoleptodiscus root rot *(Mycoleptodiscus terrestris),* neocosmospora (*Neocosmospora vasinfecta*), pod and stem blight *(Diaporthe phaseolorum),* stem canker *(Diaporthe phaseolorum var. caulivora*), phytophthora rot *(Phytophthora megasperma*), brown stem rot (*Phialophora gregata*), pythium rot *(Pythium aphanidermatum, Pythium irregulare*, *Pythium debaryanum*, *Pythium myriotylum, Pythium ultimum),* rhizoctonia root rot, stem decay, and damping-off *(Rhizoctonia solani),* sclerotinia stem decay *(Sclerotinia sclerotiorum),* sclerotinia southern blight *(Sclerotinia rolfsii),* thielaviopsis root rot (*Thielaviopsis basicola*).

The formulations of the invention may also be used in the protection of materials, especially for the protection of industrial materials against attack and destruction by phytopathogenic fungi.

In addition, the formulations of the invention may be used as antifouling compositions, alone or in combinations with other active ingredients.

"Industrial materials" in the present context are understood to mean inanimate materials which have been prepared for use in industry. For example, industrial materials which are to be protected from microbial alteration or destruction may be adhesives, glues, paper, wallpaper and board/cardboard, textiles, carpets, leather, wood, fibers and tissues, paints and plastic articles, cooling lubricants and other materials which can be infected with or destroyed by microorganisms. Parts of production plants and buildings, for example cooling-water circuits, cooling and heating systems and ventilation and air-conditioning units, which may be impaired by the proliferation of microorganisms may also be mentioned within the scope of the materials to be protected. Industrial materials within the scope of the present invention preferably include adhesives, sizes, paper and card, leather, wood, paints, cooling lubricants and heat transfer fluids, more preferably wood.

The formulations of the invention may prevent adverse effects, such as rotting, decay, discoloration, decoloration or formation of mold.

In the case of treatment of wood the formulations of the invention may also be used against fungal diseases liable to grow on or inside timber.

"Timber" means all types of species of wood, and all types of working of this wood intended for construction, for example solid wood, high-density wood, laminated wood, and plywood. In addition, the formulations of the invention may be used to protect objects which come into contact with saltwater or brackish water, especially hulls, screens, nets, buildings, moorings and signalling systems, from fouling.

The formulations of the invention may also be employed for protecting storage goods. Storage goods are understood to mean natural substances of vegetable or animal origin or processed products thereof which are of natural origin, and for which long-term protection is desired. Storage goods of vegetable origin, for example plants or plant parts, such as stems, leaves, tubers, seeds, fruits, grains, may be protected freshly harvested or after processing by (pre)drying, moistening, comminuting, grinding, pressing or roasting. Storage goods also include timber, both unprocessed, such as construction timber, electricity poles and barriers, or in the form of finished products, such as furniture. Storage goods of animal origin are, for example, hides, leather, furs and hairs. The formulations of the invention may prevent adverse effects, such as rotting, decay, discoloration, decoloration or formation of mold.

The formulations of the invention may also be used to protect seeds from unwanted microorganisms, such as phytopathogenic microorganisms, for instance phytopathogenic fungi or phytopathogenic oomycetes. The term "seed" as used herein include dormant seeds, primed seeds, pregerminated seeds and seeds with emerged roots and leaves.

Thus, the present invention also relates to a method for protecting seeds from unwanted microorganisms which comprises the step of treating the seeds with the formulations of the invention.

The treatment of seeds with the formulations of the invention protects the seeds from phytopathogenic microorganisms, but also protects the germinating seeds, the emerging seedlings and the plants after emergence from the treated seeds. Therefore, the present invention also relates to a method for protecting seeds, germinating seeds and emerging seedlings.

The seeds treatment may be performed prior to sowing, at the time of sowing or shortly thereafter.

When the seed treatment is performed prior to sowing (e.g., so-called on-seed applications), the seed treatment may be performed as follows: the seeds may be placed into a mixer with a desired amount of the formluation of the invention, the seeds and the formluations of the invention is mixed until an homogeneous distribution on seed is achieved. If appropriate, the seeds may then be dried.

The invention also relates to seeds coated with the formluations of the invention.

Preferably, the seeds are treated in a state in which it is sufficiently stable for no damage to occur in the course of treatment. In general, seeds can be treated at any time between harvest and shortly after sowing. It is customary to use seeds which have been separated from the plant and freed from cobs, shells, stalks, coats, hairs or the flesh of the fruits. For example, it is possible to use seeds which have been harvested, cleaned and dried down to a moisture content of less than 15% by weight. Alternatively, it is also possible to use seeds which, after drying, for example, have been treated with water and then dried again, or seeds just after priming, or seeds stored in primed conditions or pre-germinated seeds, or seeds sown on nursery trays, tapes or paper.

The amount of the formulation of the invention applied to the seeds is typically such that the germination of the seed is not impaired, or that the resulting plant is not damaged. This must be ensured particularly in case the active ingredient(s) of the invention would exhibit phytotoxic effects at certain application rates. The intrinsic phenotypes of transgenic plants should also be taken into consideration when determining the amount of the formluation of the invention to be applied to the seed in order to achieve optimum seed and germinating plant protection with a minimum amount of compound being employed.

The formluations of the invention can be applied as such, directly to the seeds, i.e., without the use of any other components and without having been diluted.

The formluations of the invention are suitable for protecting seeds of any plant variety. Preferred seeds are that of cereals (such as wheat, barley, rye, millet, triticale, and oats), oilseed rape, maize, cotton, soybean, rice, potatoes, sunflower, beans, coffee, peas, beet (e.g., sugar beet and fodder beet), peanut, vegetables (such as tomato, cucumber, onions and lettuce), lawns and ornamental plants. More preferred are seeds of wheat, soybean, oilseed rape, maize and rice.

The formluations of the invention may be used for treating transgenic seeds, in particular seeds of plants capable of expressing a polypeptide or protein which acts against pests, herbicidal damage or abiotic stress, thereby increasing the protective effect. Seeds of plants capable of expressing a polypeptide or protein which acts against pests, herbicidal damage or abiotic stress may contain at least one heterologous gene which allows the expression of said polypeptide or protein. These heterologous genes in transgenic seeds may originate, for example, from microorganisms of the species *Bacillus, Rhizobium, Pseudomonas, Serratia, Trichoderma, Clavibacter*, *Glomus* or *Gliocladium.* These heterologous genes preferably originate from *Bacillus* sp., in which case the gene product is effective against the European corn borer and/or the Western corn rootworm. Particularly preferably, the heterologous genes originate from *Bacillus thuringiensis.*

The following examples are given for purely illustrative and non-limiting purposes of the present invention.

### EXAMPLES

### Example 1. Stabilization of Prothioconazole for Two Weeks after Nitrogen Purging

RAXIL^{®} PRO MD is a commercial product containing 1.47% prothioconazole, 0.29% tebuconazole, and 0.59% metalaxyl in an aqueous formulation. Samples of RAXIL^{®} PRO MD were subjected to nitrogen purging by bubbling nitrogen gas through the samples for about 5 minutes. Control samples were not purged with nitrogen. The samples were then divided into the groups outlined in **Table** 1. Samples were either maintained in the dark or exposed to ambient light. In addition, certain samples were wrapped in foil to minimize contact with ambient oxygen while others were not. All samples were stored at room temperature.

After two weeks of storage under these conditions, prothioconazole desthio was quantified in each sample using liquid chromatography mass spectrometry (LC-MS) using a SCIEX TRIPLE QUAD^{™} 6500 and a standard curve generated with a prothioconazole desthio chemical standard. Nitrogen purging significantly inhibited degradation of prothioconazole to prothioconazole desthio after exposure to light for two weeks (compare sample C to sample D in **Table 1**). In contrast, the prothioconazole in the samples that were not purged with nitrogen degraded to prothioconazole desthio at levels that were over ten times higher than those observed with nitrogen-stabilized samples and samples stored in the dark (compare sample D to samples A, B, and C in **Table 1**).

**Table 1**

| **Formulation** | **Sample** | **Light Exposure (Y/N)** | **Foil (Y/N)** | **N₂ Purging (Y/N)** | **Prothioconazole Desthio wt%** | **Prothioconazole Desthio wt (ppb)** |
|---|---|---|---|---|---|---|
| RAXIL^{®} PRO MD | A | N | Y | Y | 0.000528% | 5.28 |
| | B | N | Y | N | 0.000544% | 5.44 |
| | C | Y | N | Y | 0.000585% | 5.85 |
| | D | Y | N | N | 0.007784% | 77.84 |

### Example 2. Stabilization of Prothioconazole for Two Months after Nitrogen Purging

A suspension concentrate containing 1.45% prothioconazole ("Prothioconazole SC") was subjected to nitrogen purging for stabilization and evaluated as outlined in Example 1. All samples were stored in glass containers with exposure to ambient light at room temperature for two months. Certain samples were also wrapped with foil to limit exposure to ambient oxygen. At the conclusion of the storage period, prothioconazole desthio was quantified in each sample using LC-MS.

As observed with the samples stored for two weeks, the sample exposed to light and ambient oxygen for two months experienced degradation of prothioconazole to prothioconazole desthio at levels about ten times higher than those observed with nitrogen-stabilized samples (compare samples A and B to sample D in **Table 2**). Moreover, limiting the amount of ambient oxygen entering the sample container by wrapping the opening with foil significantly inhibited degradation of prothioconazole to prothioconazole desthio (compare sample C to sample D in **Table 2**). This study was conducted with the same group of samples stored for two months in containers made of plastic instead of glass, and similar results were observed.

**Table 2**

| **Formulation** | **Sample** | **Foil (Y/N)** | **N₂ Purging (Y/N)** | **Desthio ppm** |
|---|---|---|---|---|
| **Prothioconazole SC** | A | Y | Y | 10.46 |
| | B | N | Y | 16.28 |
| | C | Y | N | 13.71 |
| | D | N | N | 124.70 |

### Example 3. Stabilization of Prothioconazole with Cyclodextrins

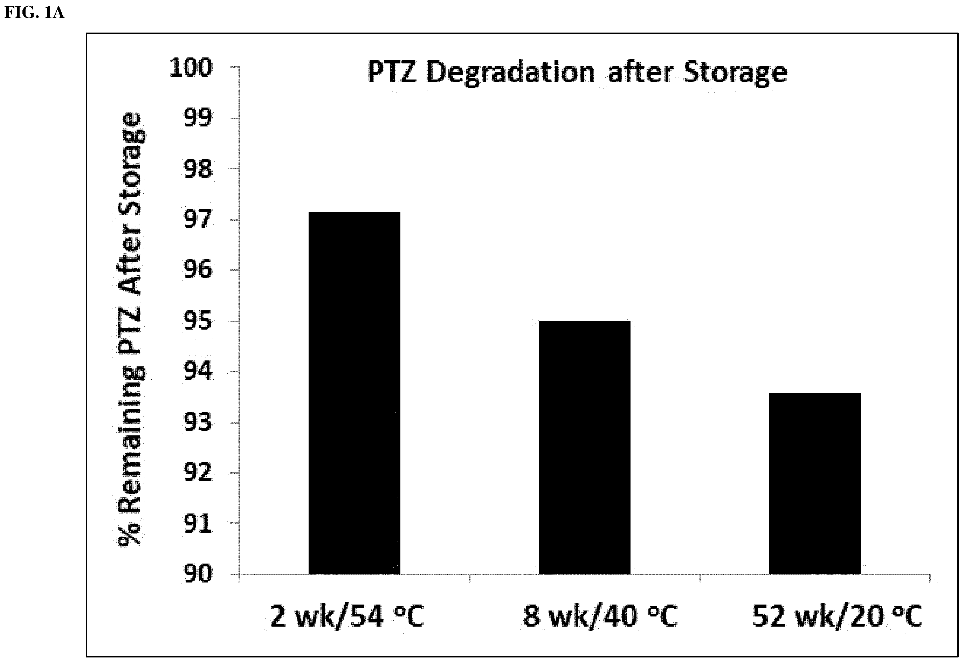

Aqueous solutions of prothioconazole (PTZ) at a concentration of about 1% to about 1.5% (w/w) were prepared. These samples were stored for two weeks at 54°C, for eight weeks at 40°C, or for 52 weeks at 20°C. The initial amount of PTZ in each sample was measured together with the final amount of PTZ after storage using LC-MS as outlined in Example 1. From these measurements the percentage of PTZ remaining after storage was calculated and ranged from about 94% to about 97% (see **FIG. 1A**).

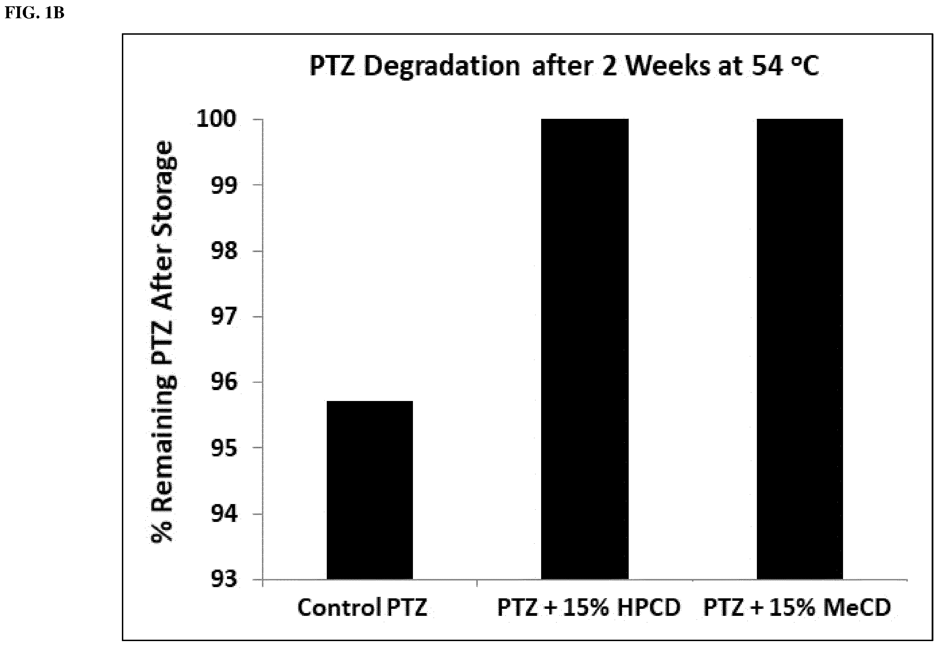

In a separate experiment, the ability of two different cyclodextrins, 2-hydroxypropyl-β cyclodextrin (HPCD) and methyl-β cyclodextrin (MeCD), to stabilize PTZ was evaluated. Aqueous solutions of PTZ at a concentration of about 1% to about 1.5% (w/w) were mixed with 15% (w/w) HPCD or 15% (w/w) MeCD. A control sample contained no cyclodextrins. The samples were stored for two weeks at 54°C, and the percentage of PTZ remaining after storage was calculated as before using LC-MS. The samples containing HPCD or MeCD experienced no observable degradation whereas the control sample experienced about 4% to 5% degradation (see **FIG. 1B**).

### Example 4. Differential Scanning Calorimetry Analysis of Physical Mixtures and Inclusion Complexes Containing Cyclodextrin

Physical mixtures and inclusion complexes containing PTZ and cyclodextrin were prepared and then analyzed with differential scanning calorimetry (DSC). Physical mixtures were prepared by combining 1.5 g of PTZ and 15 g of HPCD. Inclusion complexes were prepared by a solvent evaporation route where 1.5 g of PTZ and 15 g of HPCD were dissolved in ethanol and subsequently the solvent was evaporated under a vacccum. The resulting powder was used for DSC analysis.

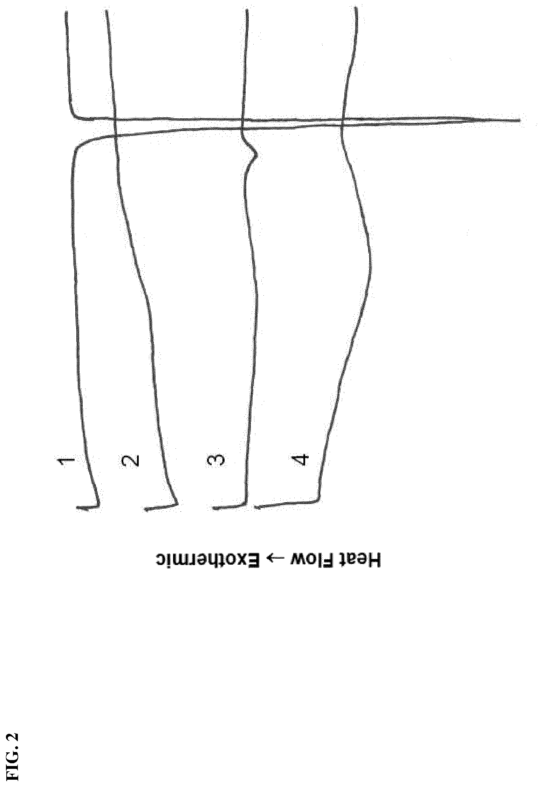

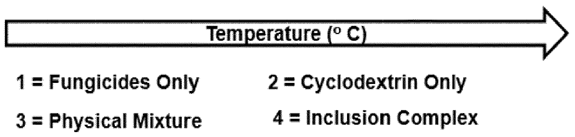

The DSC profiles of (1) PTZ; (2) HPCD; (3) a physical mixture of PTZ and HPCD; and (4) an inclusion complex of PTZ and HPCD are shown in **FIG. 2****.** The DSC profile of (1) PTZ only shows a higly discrete and pronounced peak which represents the melting temperature of PTZ. The DSC profile of (2) HPCD only shows essentially a straight line signifying that there are no thermal events present when HPCD is subjected to heat. The (3) physical mixture of PTZ and HPCD shows that the melting temperature is still present which suggests that no complex has been formed between PTZ and HPCD. Lastly, the DSC profile of (4) PTZ and HPCD prepared via solvent evaporation shows a new peak which represents the formation of an inclusion complex and the complete absence of the PTZ melting point. This indicates that an inclusion complex has successfully been formed between PTZ and HPCD.

### Example 5. Stabilization of Mixtures of Prothioconazole and Penflufen with Increasing Amounts of Cyclodextrin

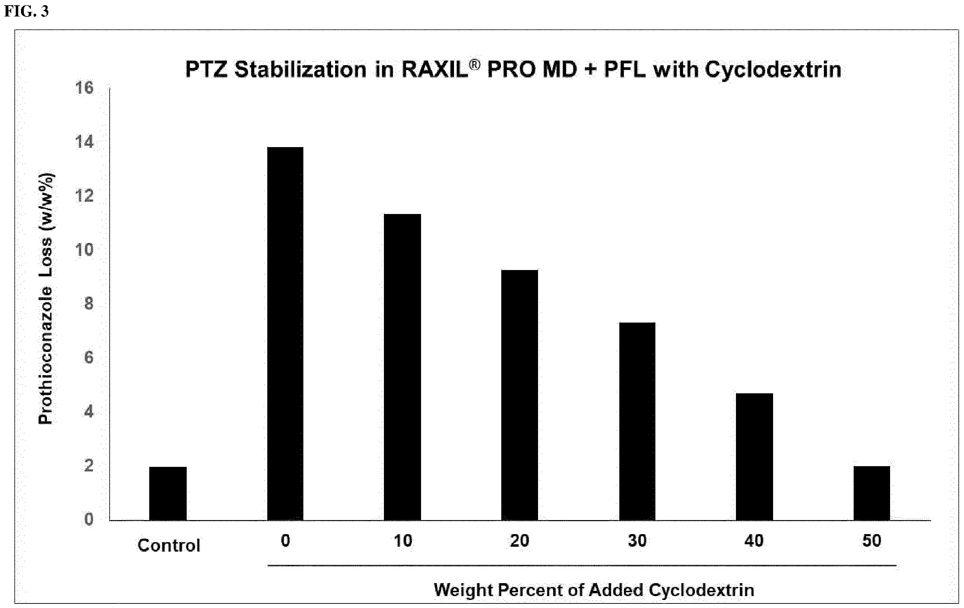

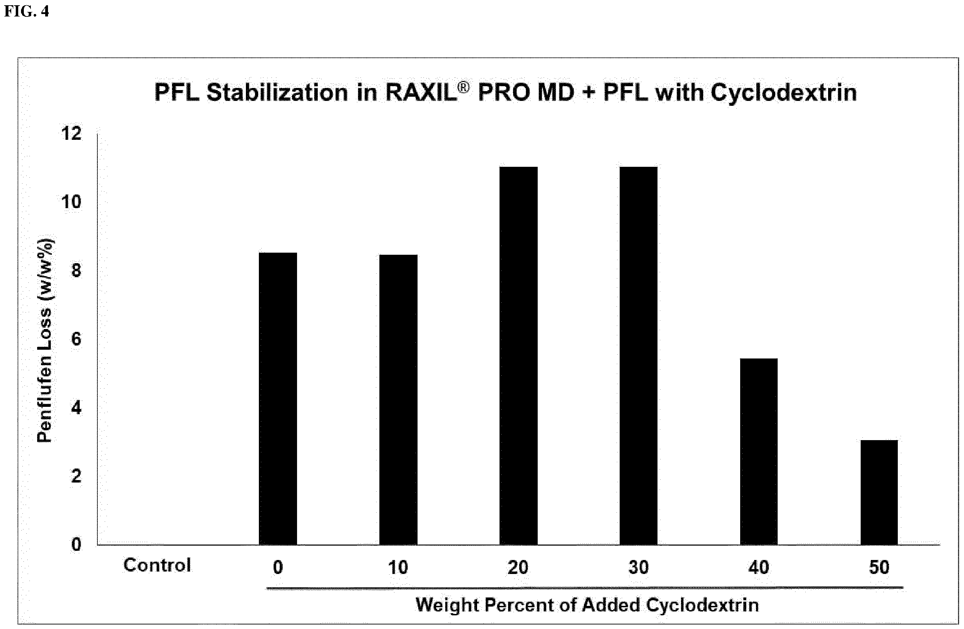

Samples of RAXIL^{®} PRO MD + PFL (1.38% w/w) containing methyl cyclodextrin (MeCD) ranging from 0% (w/w) to 25% (w/w) were stored for two weeks at 54°C and the average degradation of PTZ and PFL determined by HPLC. A sample containing PTZ without any PFL or cyclodextrin was included as the "Control" in **FIGs. 3** and **4****.**

The degradation of PTZ decreased with the addition of cyclodextrin in a dose-dependent manner with the highest concentration of cyclodextrin producing an 86% reduction in degradation (see **FIG. 3**). Similarly, addition of cyclodextrin at concentrations of 40% (w/w) and 50% (w/w) prevented the degradation of PFL with the highest concentration of cyclodextrin producing a 65% reduction in degradation (see **FIG. 4**).

Penflufen is a substituted pyrazole carboxamide fungicide having the following structure:

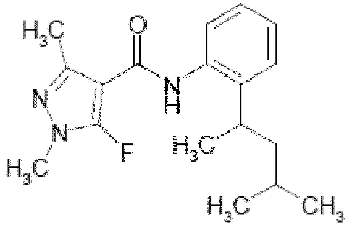

### Example 6. Stabilization of Prothioconazole and Penflufen with Cyclodextrin at Various Temperatures Over Time

Aqueous solutions of a mixture of prothioconazole (PTZ) at a concentration of about 1.5% (w/w), and penflufen at a concentration of about 1.65% (w/w), were prepared and physically mixed with MeCD at 25 wt%. These samples were stored for two weeks at 54°C, for eight weeks at 40°C, or for 6 months at 30°C. The initial amount of PTZ or PFL in each sample was measured together with the final amount of PTZ or PLF after storage using HPLC. From these measurements the percentage of PTZ remaining after storage was calculated and ranged from about 95% to 98%, and the percentage of PFL remaining after storage was calculated and ranged from about 91.5% to 97.5%. See **Table 3** and **Table 4.**

**Table 3**

| **Prothioconazole with 25 wt% MeCD** | | |
|---|---|---|
| **Time** | **% PTZ** | **% Degradation** |
| T0 | 1.49 | 0 |
| 54°C for 2 weeks | 1.45 | 2.68 |
| 40°C for 8 weeks | 1.43 | 4.03 |
| 30°C for 6 months | 1.46 | 2.01 |

| **Penflufen with with 25 wt% MeCD** | | |
|---|---|---|
| **Time** | **% PFL** | **% Degradation** |
| T0 | 1.68 | 0 |
| 54°C for 2 weeks | 1.6 | 4.76 |
| 40°C for 8 weeks | 1.54 | 8.33 |
| 30°C for 6 months | 1.62 | 3.57 |

**Table 4**

| **Prothioconazole with 25 wt% MeCD** | | |
|---|---|---|
| **Time** | **% PTZ** | **% Degradation** |
| T0 | 1.49 | 0 |
| 54°C for 2 weeks | 1.46 | 2.01 |
| 40°C for 8 weeks | 1.42 | 4.70 |
| 30°C for 6 months | 1.46 | 2.01 |

| **Penflufen with with 25 wt% MeCD** | | |
|---|---|---|
| **Time** | **% PFL** | **% Degradation** |
| T0 | 1.64 | 0 |
| 54°C for 2 weeks | 1.58 | 3.66 |
| 40°C for 8 weeks | 1.60 | 2.44 |
| 30°C for 6 months | 1.58 | 3.66 |

Unless defined otherwise, all technical and scientific terms herein have the same meaning as commonly understood by one of ordinary skill in the art to which this invention belongs. All publications, patents, and patent publications cited are incorporated by reference herein in their entirety for all purposes.

It is understood that the disclosed invention is not limited to the particular methodology, protocols and materials described as these can vary. It is also understood that the terminology used herein is for the purposes of describing particular embodiments only and is not intended to limit the scope of the present invention which will be limited only by the appended claims.

Those skilled in the art will recognize, or be able to ascertain using no more than routine experimentation, many equivalents to the specific embodiments of the invention described herein. Such equivalents are intended to be encompassed by the following claims.

## Claims

1. A method for inhibiting degradation of a triazole and/or pyrazole fungicide in a liquid formulation, comprising
(a) packaging the formulation in a suitable container;
(b) reducing oxygen exposure of the triazole and/or pyrazole fungicide in the formulation as compared to oxygen exposure of the triazole fungicide when the formulation is in contact with air; and
(c) closing or sealing the container.

2. The method according to Claim 1, wherein the container is with reduced or without headspace.

3. The method according to Claim 1 or 2, wherein the container reduces or prevents diffusion of oxygen.

4. The method according to any one of Claims 1 to 3, wherein the oxygen exposure in step (b) is reduced by flushing the headspace and/or the formulation with a gas comprising less oxygen compared to air or with no oxygen.

5. The method according to Claim 4, wherein the gas is hydrogen, nitrogen, helium, neon, argon, krypton, xenon, radon, carbon dioxide, nitrous oxide, hydrogen sulfide, a lower alkane, a halo alkane, an alkoxy alkane or a mixture thereof.

6. The method according to Claim 5, wherein the gas is nitrogen.

7. The method according to any one of Claims 1 to 6, wherein the triazole fungicide is selected from the group consisting of azaconazole, bitertanol, bromuconazole, cyproconazole, diclobutrazol, difenoconazole, diniconazole, diniconazole-M, epoxiconazole, etaconazole, fenbuconazole, fluquinconazole, flusilazole, flutriafol, furconazole, furconazole-cis, hexaconazole, imibenconazole, ipconazole, metconazole, myclobutanil, paclobutrazol, penconazole, propiconazole, prothioconazole, quinconazole, simeconazole, tebuconazole, tetraconazole, triadimefon, triadimenol, triticonazole, uniconazole, uniconazole-P, voriconazole, and 1-(4-chlorophenyl)-2-(1H-1,2,4-triazol-1-yl)cycloheptanol; and the pyrazole fungicide is selected from the group consisting of benzovindiflupyr, bixafen, fluindapyr, fluxapyroxad, furametpyr, isopyrazam, penflufen, penthiopyrad pydiflumetofen, pyrapropoyne, rabenzazole, and sedaxane.

8. The method according to any one of the preceding claims, wherein the liquid formulation further comprises one or more further agrochemical active substances.

9. The method according to Claim 8, wherein in said liquid formulation the one or more further agrochemical active substances are one or more insecticides, nematocides, fungicides, insect growth regulators, plant growth regulators, or plant growth enhancement agents.

10. The method according to Claim 9, wherein in said liquid formulation the one or more further agrochemical active substances are one or more fungicides.

11. The method according to Claim 10, wherein in said liquid formulation the one or more fungicides are inhibitors of the respiratory chain at Complex I or II selected from the group consisting of benzovindiflupyr, bixafen, boscalid, carboxin, fluopyram, flutolanil, fluxapyroxad, furametpyr, Isofetamid, isopyrazam (anti-epimeric enantiomer 1R,4S,9S), isopyrazam (anti-epimeric enantiomer 1S,4R,9R), isopyrazam (anti-epimeric racemate 1RS,4SR,9SR), isopyrazam (mixture of syn-epimeric racemate 1RS,4SR,9RS and anti-epimeric racemate 1RS,4SR,9SR), isopyrazam (syn-epimeric enantiomer 1R,4S,9R), isopyrazam (syn-epimeric enantiomer 1S,4R,9S), isopyrazam (syn-epimeric racemate 1RS,4SR,9RS), penflufen, penthiopyrad, pydiflumetofen, Pyraziflumid, sedaxane, 1,3-dimethyl-N-(1,1,3-trimethyl-2,3-dihydro-1H-inden-4-yl)-1H-pyrazole-4-carboxamide, 1,3-dimethyl-N-[(3R)-1,1,3-trimethyl-2,3-dihydro-1H-inden-4-yl]-1H-pyrazole-4-carboxamide, 1,3-dimethyl-N-[(3S)-1,1,3-trimethyl-2,3-dihydro-1H-inden-4-yl]-1H-pyrazole-4-carboxamide, 1-methyl-3-(trifluoromethyl)-N-[2'-(trifluoromethyl)biphenyl-2-yl]-1H-pyrazole-4-carboxamide, 2-fluoro-6-(trifluoromethyl)-N-(1,1,3-trimethyl-2,3-dihydro-1H-inden-4-yl)benzamide, 3-(difluoromethyl)-1-methyl-N-(1,1,3-trimethyl-2,3-dihydro-1H-inden-4-yl)-1H-pyrazole-4-carboxamide, 3-(difluoromethyl)-1-methyl-N-[(3R)-1,1,3-trimethyl-2,3-dihydro-1H-inden-4-yl]-1H-pyrazole-4-carboxamide, 3-(difluoromethyl)-1-methyl-N-[(3S)-1,1,3-trimethyl-2,3-dihydro-1H-inden-4-yl]-1H-pyrazole-4-carboxamide, Fluindapyr, 3-(difluoromethyl)-N-[(3R)-7-fluoro-1,1,3-trimethyl-2,3-dihydro-1H-inden-4-yl]-1-methyl-1H-pyrazole-4-carboxamide, 3-(difluoromethyl)-N-[(3S)-7-fluoro-1,1,3-trimethyl-2,3-dihydro-1H-inden-4-yl]-1-methyl-1H-pyrazole-4-carboxamide, 5,8-difluoro-N-[2-(2-fluoro-4-{[4-(trifluoromethyl)pyridin-2-yl]oxy}phenyl)ethyl]quinazolin-4-amine, N-(2-cyclopentyl-5-fluorobenzyl)-N-cyclopropyl-3-(difluoromethyl)-5-fluoro-1-methyl-1H-pyrazole-4-carboxamide, N-(2-tert-butyl-5-methylbenzyl)-N-cyclopropyl-3-(difluoromethyl)-5-fluoro-1-methyl-1H-pyrazole-4-carboxamide, N-(2-tert-butylbenzyl)-N-cyclopropyl-3-(difluoromethyl)-5-fluoro-1-methyl-1H-pyrazole-4-carboxamide,) N-(5-chloro-2-ethylbenzyl)-N-cyclopropyl-3-(difluoromethyl)-5-fluoro-1-methyl-1H-pyrazole-4-carboxamide, N-(5-chloro-2-isopropylbenzyl)-N-cyclopropyl-3-(difluoromethyl)-5-fluoro-1-methyl-1H-pyrazole-4-carboxamide, N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, N-[1-(2,4-dichlorophenyl)-1-methoxypropan-2-yl]-3-(difluoromethyl)-1-methyl-1H-pyrazole-4-carboxamide, N-[2-chloro-6-(trifluoromethyl)benzyl]-N-cyclopropyl-3-(difluoromethyl)-5-fluoro-1-methyl-1H-pyrazole-4-carboxamide, N-[3-chloro-2-fluoro-6-(trifluoromethyl)benzyl]-N-cyclopropyl-3-(difluoromethyl)-5-fluoro-1-methyl-1H-pyrazole-4-carboxamide, N-[5-chloro-2-(trifluoromethyl)benzyl]-N-cyclopropyl-3-(difluoromethyl)-5-fluoro-1-methyl-1H-pyrazole-4-carboxamide, N-cyclopropyl-3-(difluoromethyl)-5-fluoro-1-methyl-N-[5-methyl-2-(trifluoromethyl)benzyl]-1H-pyrazole-4-carboxamide, N-cyclopropyl-3-(difluoromethyl)-5-fluoro-N-(2-fluoro-6-isopropylbenzyl)-1-methyl-1H-pyrazole-4-carboxamide, N-cyclopropyl-3-(difluoromethyl)-5-fluoro-N-(2-isopropyl-5-methylbenzyl)-1-methyl-1H-pyrazole-4-carboxamide, N-cyclopropyl-3-(difluoromethyl)-5-fluoro-N-(2-isopropylbenzyl)-1-methyl-1H-pyrazole-4-carbothioamide, N-cyclopropyl-3-(difluoromethyl)-5-fluoro-N-(2-isopropylbenzyl)-1-methyl-1H-pyrazole-4-carboxamide, N-cyclopropyl-3-(difluoromethyl)-5-fluoro-N-(5-fluoro-2-isopropylbenzyl)-1-methyl-1H-pyrazole-4-carboxamide, N-cyclopropyl-3-(difluoromethyl)-N-(2-ethyl-4,5-dimethylbenzyl)-5-fluoro-1-methyl-1H-pyrazole-4-carboxamide, N-cyclopropyl-3-(difluoromethyl)-N-(2-ethyl-5-fluorobenzyl)-5-fluoro-1-methyl-1H-pyrazole-4-carboxamide, N-cyclopropyl-3-(difluoromethyl)-N-(2-ethyl-5-methylbenzyl)-5-fluoro-1-methyl-1H-pyrazole-4-carboxamide, N-cyclopropyl-N-(2-cyclopropyl-5-fluorobenzyl)-3-(difluoromethyl)-5-fluoro-1-methyl-1H-pyrazole-4-carboxamide, N-cyclopropyl-N-(2-cyclopropyl-5-methylbenzyl)-3-(difluoromethyl)-5-fluoro-1-methyl-1H-pyrazole-4-carboxamide, N-cyclopropyl-N-(2-cyclopropylbenzyl)-3-(difluoromethyl)-5-fluoro-1-methyl-1H-pyrazole-4-carboxamide, and pyrapropoyne.

12. The method according to Claim 11, wherein in said liquid formulation the fungicide is a triazole fungicide and the inhibitor of the respiratory chain at Complex I or II is penflufen.

13. The method according to any one of the preceeding claims, wherein in said liquid formulation the fungicide is a mixture of a triazole fungicide and a pyrazole fungicide.

14. The method according to any one of the preceeding claims, wherein in said liquid formulation the triazole fungicide is prothioconazole and the pyrazole fungicide is penflufen.

15. The method according to any one of the preceeding claims, wherein said liquid formulation is an aqueous formulation.

16. The method according to Claim 15, wherein said liquid formulation is an aqueous dispersion.

17. A closed container comprising a liquid formulation comprising a triazole and/or a pyrazole fungicide within the container,
wherein the oxygen exposure of the triazole and/or pyrazolefungicide in the formulation is reduced compared to oxygen exposure of the triazole and/or pyrazole fungicide when the formulation is in contact with air by the method according to any one of Claims 1 to 16.
